(19) Europäisches Patentamt / European Patent Office / Office européen des brevets

(11) **EP 4 675 712 A1**

(12) **EUROPEAN PATENT APPLICATION**
published in accordance with Art. 153(4) EPC

(43) Date of publication:
**07.01.2026 Bulletin 2026/02**

(21) Application number: **24763769.7**

(22) Date of filing: **22.02.2024**

(51) International Patent Classification (IPC):
*H01M 4/66* (2006.01)      *B32B 27/36* (2006.01)
*C08J 5/18* (2006.01)      *H01G 9/048* (2006.01)
*H01G 11/68* (2013.01)

(52) Cooperative Patent Classification (CPC):
**B32B 7/025; B32B 15/09; B32B 27/36; C08J 5/18; H01G 9/048; H01G 11/68; H01M 4/66;** Y02E 60/10

(86) International application number:
**PCT/JP2024/006460**

(87) International publication number:
**WO 2024/181288 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.02.2023  JP 2023029449
28.02.2023  JP 2023029451
28.02.2023  JP 2023029452
30.11.2023  JP 2023202422

(71) Applicant: **Toray Industries, Inc.**
**Tokyo 103-8666 (JP)**

(72) Inventors:
• **NITTA, Yuya**
**Otsu-shi, Shiga 520-8558 (JP)**
• **SENDAI, Toshihiro**
**Otsu-shi, Shiga 520-8558 (JP)**
• **HIGASHIOJI, Takuji**
**Otsu-shi, Shiga 520-8558 (JP)**

(74) Representative: **Kador & Partner Part mbB**
**Corneliusstraße 15**
**80469 München (DE)**

(54) **SECONDARY BATTERY, POLYESTER FILM, LAMINATED POLYESTER FILM, RESIN CURRENT COLLECTOR, MONOPOLAR CURRENT COLLECTOR, POWER STORAGE ELEMENT, ELECTRIC VEHICLE, ELECTRIC FLYING BODY, AND LAMINATED POLYESTER FILM MANUFACTURING METHOD**

(57)     A problem to be solved by the present invention is to provide a film that is resistant to heat defeat when directly depositing a thick layer composed of a metal and/or metal-based compound, a current collector with excellent external stress resistance using the film, and a secondary battery with excellent pressure durability using the film. A solution to the problem is a secondary battery including a current collector having a layer (hereinafter referred to as layer M) composed of a metal and/or metal-based compound and having a thickness of 0.2 $\mu$m or more and 3.0 $\mu$m or less on surfaces on surfaces on both sides of a polyester film that satisfies the following (1) and (2):
(1) a thickness of the polyester film is 1 $\mu$m or more and 30 $\mu$m or less; and
(2) the polyester film has a resin layer containing 0.1% by mass or more and less than 5.0% by mass of conductive particles.

EP 4 675 712 A1

**Description**

Technical Field

The present invention relates to a substrate film used to provide a thick metal layer, and a resin current collector.

Background Art

In recent years, there has been a pressing desire to reduce carbon dioxide emissions for environmental protection. The automotive industry has high expectations for reducing carbon dioxide emissions through the introduction of electric vehicles (EVs) and hybrid electric vehicles (HEVs), and the development of secondary batteries for motor drives, which hold the key to their practical application, is being diligently pursued. Examples of secondary batteries include lithium ion batteries that can achieve high energy density and high power density, as well as next-generation batteries such as lithium negative electrode batteries using a metallic lithium negative electrode, all-solid-state batteries, and air batteries. In addition to automobiles, drones, flying vehicles, and flying communication base stations are being developed as next-generation mobility devices, and there is a strong demand for lightweight, high-energy density secondary batteries.

In secondary batteries such as lithium ion batteries, metal foils (metal current collector foils) have conventionally been used as current collectors. In recent years, however, resin film current collectors composed of resin films in place of metal foils have been proposed. The resin film current collector foil is lighter than the metal current collector foil, and is expected to improve the output per unit weight of the battery.

For example, Patent Literatures 1 to 3 disclose a material for resin current collector and a resin current collector having the material for film current collector.

Citation List

Patent Literature

PTL. 1: JP 2021-182519 A
PTL. 2: JP 2021-86782 A
PTL. 3: JP 2018-98206 A

Summary of Invention

Technical Problem

The resin film current collector foil mainly has a configuration in which a surface layer composed of a metal and/or metal compound (hereinafter referred to as "surface metal layer") provided on surfaces on both sides of a resin film as a base material by a vapor deposition processing such as vacuum deposition or vacuum sputtering. The above-described vapor deposition processing has a problem in that the surface of the resin film is thermally damaged by high-temperature metal vapor, resulting in a degradation of the mechanical properties of the film (hereinafter also referred to as heat defeat).

To suppress heat defeat of the film, it is common to charge the surface of the resin film by a discharge treatment or the like, and then apply high conveyance tension to the film to keep it in close contact with a cooling metal roll at a low temperature while performing vapor deposition processing. However, when the film becomes thinner, unpredictable wrinkles during conveyance and folded end parts occur, which leads to poor adhesion to the cooling metal roll, resulting in pronounced heat defeat. In order to solve the problems of the wrinkles and folded end parts, one method is to increase the conveyance tension, but this makes the film more susceptible to breakage. Another method is to increase the amount of power used in the discharging treatment in order to improve the charging efficiency, but defects are likely to occur on the film surface due to sudden abnormal discharging. Thus, both methods have their limitations. Furthermore, as the metal deposition layer becomes thicker, the film is more susceptible to thermal damage, and therefore even slight adhesion failure to the cooling roll may result in pronounced heat defeat.

For the reason described above, it is important to improve the adhesion to the cooling metal roll with the film characteristics in order to suppress heat defeat of the film.

Patent Literatures 1 to 3 disclose resin current collectors using polyimide resin films or conductive polyolefin films which have been imparted with electrical conductivity. However, when a thick metal layer is formed on the surface of these base material films by vapor deposition, it is found that heat defeat occurs, the mechanical properties are significantly degraded, and defects occur in the metal layer when stress is applied to the film. It is also found that when a film having such a surface metal layer is used as a current collector for a secondary battery, the current collector was short-circuited when subjected to external stress, resulting in a degraded battery characteristics.

An object of the present invention is to provide a film that is resistant to heat defeat when directly depositing a thick layer composed of a metal and/or metal-based compound, a current collector with excellent external stress resistance using the film, and a secondary battery with excellent pressure durability using the film.

Solution to Problem

In order to solve the above problems, a preferred aspect of the present invention adopts the following configuration.

[I] A secondary battery including a current collector having a layer (hereinafter referred to as layer M) composed of a metal and/or metal-based compound and having a thickness of 0.2 μm or more and 3.0 μm or less on surfaces on both sides of a polyester film that satisfies the following (1) and (2):

(1) a thickness of the polyester film is 1 μm or more and 30 μm or less; and
(2) the polyester film has a resin layer containing 0.1% by mass or more and less than 5.0% by mass of conductive particles.

[II] The secondary battery according to [I], wherein 100% by mass of the conductive particles contain at least one selected from furnace black, Ketjen black, carbon nanotubes, and acetylene black in a total amount of 80% by mass or more and 100% by mass or less.

[III] The secondary battery according to [I] or [II], including a current collector in which an active material layer is directly laminated on a surface of the layer M.

[IV] The secondary battery according to any one of [I] to [III], wherein the layer M includes the current collector containing aluminum element or copper element.

[V] The secondary battery according to any one of [I] to [IV], including the current collector having a thickness of 4 μm or more and 7 μm or less.

[VI] The secondary battery according to any one of [I] to [V], including a configuration in which at least 45 or more and 80 or less layers of the current collectors are laminated with a lamination configuration interposed therebetween, the lamination configuration (hereinafter referred to as an active agent layer) including a positive-electrode active material layer and a negative-electrode active material layer.

[VII] The secondary battery according to any one of [I] to [VI], including a configuration in which at least 45 or more and 80 or less layers of the current collectors are laminated, the laminated current collectors having a joint with one electrode tab, the joint having depressions with a depth of 0.1 mm or more and 1.0 mm or less at intervals of 0.3 mm or more and 0.8 mm or less.

[VIII] The secondary battery according to [VI], wherein the thickness of the current collector is 0.01 times or more and 0.04 times or less the thickness of the active agent layer.

[IX] The secondary battery according to any one of [I] to [VIII], wherein D1/D2 is 0.9 or more and 1.2 or less, where D1 (μm) is a thickness of the end part of the current collector, and D2 (μm) is a thickness of the current collector at a position 20 mm inward from the end part of the current collector.

[X] The secondary battery according to any one of [I] to [IX], wherein the layer M contains aluminum element, and a current collector is mounted in which a positive-electrode active material layer having a thickness of 90 μm or more and 120 μm or less is laminated on a surface of the layer M containing aluminum element.

[XI] The secondary battery according to any one of [I] to [IX], wherein the layer M contains copper element, and a current collector is mounted in which a negative-electrode active material layer having a thickness of 80 μm or more and 170 μm or less is laminated on a surface of the layer M containing copper element.

[XII] The secondary battery according to [II], including an electrolytic solution containing furnace black and Ketjen black in a total amount of 0.001 mass ppm or more and 100 mass ppm or less.

[XIII] A polyester film, satisfying the following (3) and (4), and used to directly deposit a layer (hereinafter referred to as layer M) that is composed of a metal and/or metal-based compound and has a thickness of 0.2 μm or more and 3.0 μm or less:

(3) a volume resistivity at 23°C and 65 %RH is $1.0 \times 10^8$ Ωcm or more and $9.0 \times 10^{16}$ Ωcm or less; and
(4) a thickness of the polyester film is 1 μm or more and 30 μm or less.

[XIV] The polyester film according to [XIII], wherein the layer M includes aluminum element or copper element.

[XV] The polyester film according to [XIII] or [XIV], including a resin layer (layer P1) containing 0.1% by mass or more and less than 5.0% by mass of the carbon material.

[XVI] The polyester film according to [XV], wherein 100% by mass of the carbon material contains at least one selected from furnace black, Ketjen black, carbon nanotubes, and acetylene black in a total amount of 80% by mass or more and 100% by mass or less.

[XVII] The polyester film according to [XV], wherein a polyester resin layer (layer P2) with a carbon material content lower than that in the layer P1 is provided on at least one side of the layer P1, and the following relation is satisfied:

$$M_{P1} - M_{P2} \geq 0.1$$

where $M_{P1}$ (% by mass) is a carbon material content in the layer P1, and $M_{P2}$ (% by mass) is a carbon material content in the layer P2.

[XVIII] The polyester film according to any one of [XIII] to [XVII], wherein the relative permittivity determined using a molecular orientation analyzer is 3.5 or more and 7.0 or less.

[XIX] A laminated polyester film including a layer (hereinafter referred to as layer M) that is composed of a metal and/or metal-based compound, has a thickness of 0.2 $\mu$m or more and 3.0 $\mu$m or less, and is directly laminated on surfaces on both sides of a polyester film that satisfies the following (5) and (6):

(5) a volume resistivity at 23°C and 65 %RH is $1.0 \times 10^8$ $\Omega$cm or more and $9.0 \times 10^{16}$ $\Omega$cm or less; and
(6) a thickness of the polyester film is 1 $\mu$m or more and 30 $\mu$m or less.

[XX] The laminated polyester film according to [XIX], wherein elongation at break in at least one of the in-plane longitudinal direction and the in-plane width direction of the film is 50% or more and 120% or less.

[XXI] A resin current collector including the polyester film according to [XIII] or the laminated polyester film according to [XIX].

[XXII] A monopolar current collector including a layer (hereinafter referred to as layer M) that has a thickness of 0.2 $\mu$m or more and 3.0 $\mu$m or less and is composed of a metal and/or metal-based compound on surfaces on both sides of a polyester film, and satisfying the following (7) and (8):

(7) a thickness of the polyester film is 1 $\mu$m or more and 30 $\mu$m or less; and
(8) the monopolar current collector has a resin layer (layer P1') containing 0.1% by mass or more and less than 5.0% by mass of conductive particles.

[XXIII] The monopolar current collector according to [XXII], wherein 100% by mass of the conductive particles contain at least one selected from Ketjen black, carbon nanotubes, and acetylene black in a total amount of 80% by mass or more and 100% by mass or less.

[XXIV] The monopolar current collector according to [XXII] or [XXIII], including a polyester film having a volume resistivity at 23°C and 65 %RH of $1.0 \times 10^8$ $\Omega$cm or more and $9.0 \times 10^{16}$ $\Omega$cm or less.

[XXV] The monopolar current collector according to any one of [XXII] to [XXIV], wherein the layer M comprises aluminum element or copper element.

[XXVI] The monopolar current collector according to any one of [XXII] to [XXV], wherein elongation at break in at least one of the in-plane longitudinal direction and the in-plane width direction of the film is 50% or more and 120% or less.

[XXVII] The monopolar current collector according to any one of [XXII] to [XXVI], wherein the breaking strength in at least one of the in-plane longitudinal direction and the in-plane width direction of the film is 180 MPa or more and 300 MPa or less.

[XXVIII] The monopolar current collector according to any one of [XXII] to [XXVII], including a layer M in contact with the polyester film, the layer M having an arithmetic average height Sa of 15 nm or more and 60 nm or less.

[XXIX] The monopolar current collector according to any one of [XXII] to [XXVIII], wherein the silicon element content in the polyester film is 0 mass ppm or more and 10 mass ppm or less when the monopolar current collector is analyzed using inductively coupled plasma-atomic emission spectroscopy (ICP-AES) under the following conditions:

<Analysis conditions>

Apparatus: ICP emission spectrophotometer (manufactured by Hitachi High-Tech Science Corporation) PS3520VDDII
Sample preparation: The polyester film is weighed into a beaker, pressure-decomposed with sulfuric acid, followed by nitric acid, and then heated and incinerated. The ash is melted with a melting mixture of sodium carbonate and boric acid to a constant volume of 10 mL. The amount of silicon element in the solution diluted with dilute nitric acid is then measured by inductively coupled plasma-atomic emission spectrometry to determine the amount of the silicon element in the polyester film.

(Measurement conditions)

Measurement wavelength: 251.6 nm
High frequency output: 1.2 kW
Plasma gas flow rate: 16 L/min
Auxiliary gas flow rate: 0.5 L/min
Carrier gas flow rate: 0.9 L/min
Photometry height: 12 mm.

[XXX] The monopolar current collector according to any one of [XXII] to [XXIX], wherein the layer M includes an active material layer on its surface.

[XXXI] A power storage device including the monopolar current collector according to [XXX].

[XXXII] The power storage device according to [XXXI], including a configuration in which at least two or more layers of the current collectors are laminated with an active agent layer interposed therebetween.

[XXXIII] An electric vehicle including the secondary battery according to [I].

[XXXIV] An electric flying object including the secondary battery according to [I].

[XXXV] A method of producing a laminated polyester film, including directly depositing a layer (hereinafter referred to as layer M) composed of a metal and/or metal-based compound and having a thickness of 0.2 $\mu$m or more onto a polyester film that satisfies the following (9) and (10):

(9) a volume resistivity at 23°C and 65 %RH is $1.0 \times 10^8$ $\Omega$cm or more and $9.0 \times 10^{16}$ $\Omega$cm or less; and
(10) a film thickness of the polyester film is 1 $\mu$m or more and 30 $\mu$m or less. Advantageous Effects of Invention

An object of the present invention can provide a film that is resistant to heat defeat when directly depositing a thick layer composed of a metal and/or metal-based compound, a current collector with excellent external stress resistance using the film, and a secondary battery with excellent pressure durability using the film.

Description of Embodiments

The present invention will be described in detail below.

A preferable aspect of the present invention is a polyester film that satisfies the following (3) to (4) and is used for directly depositing a layer M having a thickness of 0.2 $\mu$m or more and 3.0 $\mu$m or less:

(3) a volume resistivity at 23°C and 65 %RH is $1.0 \times 10^8$ $\Omega$cm or more and $9.0 \times 10^{16}$ $\Omega$cm or less; and
(4) a thickness of the polyester film is 1 $\mu$m or more and 30 $\mu$m or less.

Another preferable aspect of the present invention is a laminated polyester film including a layer composed of a metal and/or metal-based compound having a thickness of 0.2 $\mu$m or more and 3.0 $\mu$m or less directly laminated on surfaces on both sides of a polyester film that satisfies the following (5) and (6):

(5) a volume resistivity at 23°C and 65 %RH is $1.0 \times 10^8$ $\Omega$cm or more and $9.0 \times 10^{16}$ $\Omega$cm or less; and
(6) a thickness of the polyester film is 1 $\mu$m or more and 30 $\mu$m or less.

By adopting this aspect, it is possible to obtain a polyester film that is resistant to heat defeat when a thick layer M is directly deposited. In particular, it is possible to suppress degradation of the mechanical properties of the film after the layer M having a thickness of 0.2 $\mu$m or more and 3.0 $\mu$m or less is provided by direct vapor deposition. Furthermore, even when deformed due to an external stress, the occurrence of defects in the resin current collector can be suppressed, and the mechanical strength of the obtained monopolar current collector and secondary battery is improved.

(Polyester film)

The polyester film of the present invention preferably has a volume resistivity at 23°C and 65% RH of $1.0 \times 10^8$ $\Omega$cm or more and $9.0 \times 10^{16}$ $\Omega$cm or less, as determined by the measurement described below. The method of measuring the volume resistivity will be described later. The volume resistivity of the polyester film is a value that indicates the ease with which charges applied to the film surface (hereinafter also referred to as electrified charges) penetrate into the polyester film when the film is electrified by a discharging treatment.

For a polyester film having a thickness of 1 $\mu$m or more and 30 $\mu$m or less, when the conveyance tension is increased to the extent that film breakage during processing does not become apparent, in a step of directly depositing an layer M having a thickness of 0.2 $\mu$m or more, the occurrence of wrinkles and folded end during the vapor deposition processing will become pronounced for a polyester film with insufficient rigidity. Therefore, by setting the volume resistivity of the polyester film at 23°C and 65% RH to $1.0 \times 10^8$ $\Omega$cm or more and $9.0 \times 10^{16}$ $\Omega$cm or less, the effect of suppressing heat defeat can be suitably obtained, as described later.

When the volume resistivity of the polyester film at 23°C and 65% RH in the present invention is $9.0 \times 10^{16}$ $\Omega$ cm or less, the adhesion with a cooling metal roll that is used during the vapor deposition processing is good and decrease in elongation at break (heat defeat) of the film after the vapor deposition can be suppressed in a case where a layer M having a thickness of 0.2 $\mu$m or more is provided by the direct vapor deposition. This is because the charge given to the polyester film by the charging treatment in the vapor deposition step appropriately penetrates into the polyester film, which improves the electrostatic adhesion between the polyester film and the cooling metal roll, thereby enabling sufficient cooling. From the similar viewpoint, the volume resistivity is more preferably $7.0 \times 10^{16}$ $\Omega$cm or less, and even more preferably $5.0 \times 10^{15}$ $\Omega$cm or less.

When the volume resistivity of the polyester film at 23°C and 65% RH in the present invention is $1.0 \times 10^8$ $\Omega$cm or more, the adhesion with a cooling metal roll is good and decrease in elongation at break among the mechanical properties of the laminated polyester film after the vapor deposition can be suppressed in a case where a layer M having a thickness of 0.2 $\mu$m or more is provided by the direct vapor deposition. This is because the charge given to the polyester film by the charging treatment in the vapor deposition step is retained within the polyester film without passing through the film and flowing out to the metal roll, thereby improving the electrostatic adhesion strength between the polyester film and the cooling metal roll. The volume resistivity at 23°C and 65 %RH is more preferably $1.0 \times 10^9$ $\Omega$cm or more, and even more preferably $1.0 \times 10^{10}$ $\Omega$cm or more.

Examples of the method of controlling the volume resistivity of the polyester film at 23°C and 65 %RH in the present invention includes a method of including conductive materials in the polyester film. The conductive material may be an inorganic material composed of a metal or metal compound, or an organic material such as a carbon material or conductive polymer.

Examples of the inorganic conductive materials include single particles of metal elements such as gold, silver, copper, zinc, lead, nickel, iron, aluminum, titanium, cobalt, manganese, cadmium, palladium, and platinum, and metal particles composed of multiple types of metal elements such as stainless steel and nickel-indium alloys, metal particles composed of metal elements such as stainless steel, nickel-indium alloys, and particles composed of metal compounds in which the above metal elements are mixed with oxygen, nitrogen, fluorine, carbon, boron, chlorine, sulfur, phosphorus.

Examples of the organic conductive materials include carbon materials and conductive polymers. The above-mentioned carbon material is a material which exhibits peaks observed around 1580 cm$^{-1}$ derived from the graphite structure (sp$^2$ bond), generally referred to as the G band, and around 1350 cm$^{-1}$ derived from the diamond structure (sp$^3$ bond), generally referred to as the D band, in Raman spectrometry. Specific examples include furnace black, Ketjen black, acetylene black, carbon nanotube (CNT), graphene, and fullerene.

Examples of the conductive polymers include polyacetylene resin, polythiophene resin, and particles having them as constituents.

The polyester film of the present invention preferably has a resin layer containing 0.1% by mass or more and less than 5.0% by mass of conductive particles. Examples of the conductive particles include metal particles, metal oxide particles, conductive resin particles, and carbon materials. The conductive particles preferably include one or more selected from metal particles, metal oxide particles, conductive resin particles, and the above-described carbon materials. More preferably, the conductive particles include the above-described carbon materials. Even more preferably, the conductive particles are carbon materials.

By setting the conductive particle content to 0.1 mass% or more, the volume resistivity of the polyester film can be reduced, the reduction in elongation at break after the layer M is deposited can be minimized, and battery durability can be made suitable when a resin current collector is produced. From the similar viewpoint, the conductive particle content is more preferably 0.2 mol% or more, and still more preferably 1.1 mol% or more.

By setting the conductive particle content to less than 5.0% by mass, excessive aggregation of the conductive particles to be included can be suppressed, thereby reducing uneven volume resistivity during the casting step and stabilizing formation of the polyester film by electrostatic application as described below. Especially, when highly conductive carbon such as Ketjen black, carbon nanotubes or acetylene black is included, the conductive particle content is more preferably 2.5 mass% or less from the similar viewpoint.

Examples of the metal particles used as the conductive particles include single particles of metal elements such as gold, silver, copper, zinc, lead, nickel, iron, aluminum, titanium, cobalt, manganese, cadmium, palladium, and platinum, and metal particles composed of multiple types of metal elements such as stainless steel and nickel-indium alloys.

Examples of the metal oxide particles used as the conductive particles include tin oxide, zinc oxide, and zinc oxide. In addition, particles having a coating layer composed of a metal exemplified for the above-described metal particles and a metal oxide exemplified for the above-described metal oxide on the surface of inorganic particles such as aluminum oxide, calcium carbonate, mica, talc, or glass can also be used.

Examples of the conductive resin particles used as the conductive particles include resins having a conjugated double bond structure in the main chain skeleton, such as polyacetylene, poly-p-phenylene, polyfluorene, and poly-p-phenylenevinylene; thiophene-based resins, such as polyethylenedioxythiophene (PEDOT)/polystyrenesulfonic acid (PSS), polythiophene, and polythienylenevinylene; polyaniline; and polypyrrole.

When the polyester film of the present invention is used as a member for a resin current collector for a lithium ion battery, from the viewpoint of preventing a conductive material falling off the polyester film from causing a short circuit in the battery and preventing the battery from igniting due to heat generation caused by an electrochemical reaction, it is a more preferable aspect that the polyester film contains an organic conductive material. From the viewpoint of being able to reduce the amount of conductive material in the polyester film raw material, the polyester film more preferably contains carbon material, and even more preferably contains one or more selected from furnace black, Ketjen black, carbon nanotubes, and acetylene black, which have high electrical conductivity, and particularly preferably contains one or more selected from Ketjen black, acetylene black, and carbon nanotube (CNT), which have better electrical conductivity among them.

In the present invention, it is preferable that 100% by mass of the conductive particles contains at least one selected from furnace black, Ketjen black, carbon nanotubes, and acetylene black in a total amount of 80% by mass or more and 100% by mass or less, from the viewpoint that the content of the conductive particles can be reduced.

Examples of the method of obtaining the polyester film containing conductive materials or conductive particles include a method in which conductive materials or conductive particles are directly mixed with a resin that is a raw material for a polyester film, and a film is formed by the method described later in (Method of producing biaxially oriented polyester film); and a method in which master pellets are prepared by melt-kneading conductive materials or conductive particles with a resin that is a raw material for a polyester film in advance, and the resin that is the raw material for the polyester film is mixed with the master pellets, and the film is formed by the method described later in (Method of producing biaxially oriented polyester film). From the viewpoint of uniformly dispersing the conductive materials or conductive particles, the method using the master pellets is preferred.

In the polyester film of the present invention, the relative permittivity determined using a molecular orientation meter is preferably 3.5 or more and 7.0 or less. The relative permittivity of the polyester film is an index representing the ease of polarization of the resin molecules constituting the polyester film. The high relative permittivity of the polyester film allows more electrons to accumulate on the surface and inside of the film when a charging treatment is performed by applying voltage. When the relative permittivity of the polyester film determined using a molecular orientation meter is 3.5 or more, the adhesion to a cooled metal roll can be improved in the step of providing a layer M by direct vapor deposition, and thermal damage due to the vapor deposition can be further suppressed. Accordingly, the degradation of the mechanical strength of the laminated polyester film having the layer M is suppressed, and when incorporated into a battery, the good mechanical properties of the battery can be obtained.

In the polyester film, it is more preferable that a volume resistivity is in the preferred range mentioned above and a relative permittivity is 3.5 or more and 7.0 or less. The relative permittivity of the polyester film determined by using a molecular orientation meter is more preferably 4.0 or more, and even more preferably 4.5 or more.

By setting the relative permittivity to 7.0 or less, it is possible to prevent the polarization of the polyester film from excessively progressing and the charge given by the charging treatment from flowing out to the metal roll side and degrading adhesion to the cooled metal roll. The relative permittivity is more preferably 6.5 or less.

When the thickness of polyester film in the present invention is indicated as T ($\mu$m), T is preferably 1 or more and 30 or less. When the thickness T ($\mu$m) of the polyester film is 1 or more, the polyester film can be easily processed without being broken in the step of providing the layer M described later. The thickness T ($\mu$m) of the polyester film is more preferably 2 or more, still more preferably 3 or more, and most preferably 4 or more. With the thickness T ($\mu$m) of the polyester film being 30 or less, an increase in the weight and thickness of the battery itself can be suppressed when the polyester film is used as a lithium ion battery member. The thickness T ($\mu$m) of the polyester film is more preferably 20 or less, more preferably 15 or less, and most preferably 7 $\mu$m or less.

The resin constituting the polyester film of the present invention is preferably a polyester resin that contains a polyester resin as a main component. The term "main component" used herein refers to a component that is contained in an amount of more than 50% by mass, taking the total components of the film as 100% by mass.

The polyester resin referred to in the present invention is obtained by polycondensation of a dicarboxylic acid constituent and a diol constituent. In the present specification, the term "constituent" refers to the smallest unit that can be obtained by hydrolysis of polyester resin.

Examples of the diol constituents constituting such polyester resins include, but not limited to, aliphatic diols such as ethylene glycol, 1,2-propanediol, 1,3-propanediol, 1,4-butanediol, 1,2-butanediol, 1,3-butanediol, 1,5-pentanediol, 1,6-hexanediol, 1,7-heptanediol, 1,8-octanediol, 1,9-nonanediol, and 1,10-decanediol; alicyclic diols such as 1,4-cyclohexane dimethanol and spiroglycol; and those in which a plurality of the above-mentioned diols are linked together.

Examples of the dicarboxylic acid constituents constituting such polyester resins include aromatic dicarboxylic acids such as terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, and 4,4'-diphenyl ether dicarboxylic acid.

Examples of the polyester resins containing such dicarboxylic acid constituents and diol constituents include polyethylene terephthalate (PET), polybutylene terephthalate (PBT), polytrimethylene terephthalate (PTT), and polycyclohexylenedimethylene terephthalate (PCT). It is preferable to use polyethylene terephthalate (PET) from the viewpoint of excellent moldability.

These polyester resins may contain isophthalic acid or naphthalenedicarboxylic acid as a part of the dicarboxylic acid constituent of polyester. That is, the polyester resins may be copolymerized with them, so long as the effect of the present invention is not affected.

The polyester film of the present invention is preferably a film that is used for directly depositing a layer M having a thickness of 0.2 $\mu$m or more and 3.0 $\mu$m or less described later. Directly depositing referred to in the present invention means that a layer M, which will be described later, is provided on the surface of the polyester film (the surfaces of the layer P1, layer P1', and/or layer P2 described later) in the present invention, or that the surface of the polyester film (the surfaces of the layer P1, layer P1', and/or layer P2 described later) and a layer M, which will be described later, are provided with a layer having a thickness of 0.0 $\mu$m or more and 0.1 $\mu$m or less interposed therebetween, for the purpose of improving the adhesion between the two layers. Here, "with a layer having a thickness of 0.0 $\mu$m interposed therebetween" means that the surface of the polyester film (the surface of the layer P1, layer P1', and/or layer P2 described later) and the layer M described below are directly laminated.

To provide the layer M of the present invention, a method of providing the layer M by metal vapor deposition or metal sputtering under vacuum conditions can be used. Details are described below.

(Layer P1: Resin layer containing 0.1% by mass or more and less than 5.0% by mass of carbon material)

The polyester film of the present invention preferably has a resin layer (layer P1) containing 0.1% by mass or more and less than 5.0% by mass of carbon materials.

As the carbon materials, the above-mentioned conductive materials can be suitably used, whereby the volume resistivity of the polyester film of the invention at 23°C and 65% RH can be controlled within a preferred range. As the carbon materials contained in the layer P1, from the viewpoint of obtaining an effect with a small content, it is preferable to contain one or more selected from furnace black, Ketjen black, acetylene black, and carbon nanotube (CNT) as highly conductive carbon materials.

By setting the conductive particle content in the layer P1 of the present invention to 0.1 mass% or more, the volume resistivity of the polyester film can be reduced, the reduction in elongation at break after the layer M is deposited can be minimized, and battery durability can be made suitable when a resin current collector is produced. From the similar viewpoint, the carbon material content in the layer P1 is preferably 0.2% by mass or more, and more preferably 1.1% by mass or more.

By setting the carbon material content in the layer P1 to less than 5.0% by mass, excessive aggregation of the carbon materials to be included can be suppressed, thereby reducing uneven volume resistivity during the casting step and stabilizing formation of the polyester film by electrostatic application as described below. From the similar viewpoint, the carbon material content in the layer P1 is more preferably 2.5% by mass or less.

The carbon material contained in the layer P1 of the present invention preferably contains one or more selected from furnace black, acetylene black, carbon nanotubes, graphene, Ketjen black, fullerene, and graphite in a total amount of 80% by mass to 100% by mass based on 100% by mass of the carbon material. From the viewpoint of imparting electrical conductivity with a small amount of addition, it is more preferable that at least one selected from furnace black, Ketjen black, carbon nanotubes, and acetylene black be contained in a total amount of 80% by mass or more and 100% by mass or less based on 100% by mass of the carbon materials. It is even more preferrable that one or more selected from acetylene black, carbon nanotubes, and Ketjen black be contained in total amount of 80% by mass or more and 100% by mass or less based on 100% by mass of the carbon materials.

(Layer P2: Resin layer with carbon material content lower than that in layer P1)

In the polyester film of the present invention, it is preferable that a polyester resin layer (layer P2) with a carbon material content lower than that in the layer P1 is provided on at least one side of the layer P1, and the following relation is satisfied:

$$M_{P1} - M_{P2} \geq 0.1$$

where $M_{P1}$ (% by mass) is a carbon material content in the layer P1, and $M_{P2}$ (% by mass) is a carbon material content in the layer P2.

This is because, in the casting step for film formation, coextrusion is performed such that the casting drum and the layer P2 are in contact with each other to form an unstretched film, and therefore, even when the P1 layer has a high carbon material content and discharge turbulence occurs, the layer P2 catches the discharge and suppresses the occurrence of uneven discharge.

As the carbon material to be contained in the layer P2, the carbon materials exemplified for the conductive material above can be used. The carbon material contained in the layer P2 is preferably one or more selected from furnace black, Ketjen black, acetylene black, and carbon nanotube (CNT), and from the viewpoint of developing electrical conductivity with a small content, more preferably one or more selected from Ketjen black, acetylene black, and carbon nanotube (CNT).

The lamination configuration of the polyester film of the present invention may be a two-layer configuration of layer P2/layer P1 or a three-layer configuration of layer P2/layer P1/layer P2.

(Biaxially oriented polyester film)

The polyester film of the present invention is more preferably biaxially oriented from the viewpoint of improving the mechanical strength and thermal dimensional stability of the film. The biaxial orientation improves the mechanical strength of the polyester film, which prevents wrinkling and curling, and also prevents film breakage in the processing step to provide the layer M. Applying uniform stretching stress in the stretching step makes the thickness in the width direction and the longitudinal direction of the polyester film uniform, thereby suppressing variations in electrical properties as a resin current collector foil due to sudden thickness unevenness when used as a resin current collector.

The "biaxially oriented" referred to here means that the biaxial orientation pattern is shown by wide-angle X-ray diffraction. A biaxially oriented polyester film of the present invention can generally be obtained by stretching an unstretched thermoplastic resin sheet in an axial direction of the film-forming machine (hereinafter also referred to as a longitudinal direction) and in a width direction, followed by heat treatment to complete oriented crystallization.

In the polyester film of the present invention, the intrinsic viscosity (IV) of the entire polyester film is preferably 0.60 dl/g or more, and more preferably 0.70 dl/g or more. When the IV is 0.60 dl/g or more, it is possible to prevent excessive progression of crystallization due to short polyester molecular chains, resulting in breakage during the stretching step, and to enable stable film formation.

When the polyester film of the present invention has the lamination configuration composed of the layer P1 and the layer P2 mentioned above, there are no particular limitations on the method of laminating the layer P1 and the layer P2. Examples of the method that can be used include a coextrusion method, in which the resin of each layer described below is extruded in a molten state, a method (melt-lamination method), in which raw materials for other resin layers are charged into and an extruder, melt-extruded, and laminated while extruded from a die, and a method in which films after film formation are laminated through an adhesive layer. Among them, the coextrusion method is preferably used from the viewpoint that excellent uniformity of lamination is obtained and it is less likely to cause disturbance foreign matter to enter between the layers.

(Method of producing biaxially oriented polyester film)

Next, the method of producing the polyester film of the present invention as a biaxially oriented film will be described with examples, but the present invention should not be construed as limited only to the product obtained by such examples.

As a method to obtain the polyester film, the conventional polymerization method can be adopted. For example, the above-mentioned dicarboxylic acid component or its ester-forming derivative and the above-mentioned diol component or its ester-forming derivative are subjected to a transesterification reaction or an esterification reaction by a known method, followed by a melt polymerization reaction to obtain the polyester film. If necessary, the polyester resin obtained by the melt polymerization reaction may be subjected to a solid phase polymerization reaction at a temperature equal to or less than the melting point of the polyester resin.

The polyester film of the present invention can be obtained by a conventionally known production method. Specifically, a method (melt casting method) can be used in which the polyester film of the present invention can be processed into a sheet by heating and melting raw materials, which are dried as necessary, in an extruder, and extruding the raw materials from a die onto a cooled casting drum. Another method (solution casting method) can also be used in which raw materials are dissolved in a solvent, the solution is extruded through a die onto a substrate such as a casting drum or endless belt to form a film, and then the solvent is dried and removed from the film layer to form a sheet.

When a polyester film having two or more layers is produced by the melt casting method, a method (coextrusion method) is preferably used in which an extruder is used for each layer constituting the biaxially oriented polyester film, the raw materials for each layer are melted, and they are laminated in a molten state in a converging device provided between an extruder and a die, and then guided to the die, extruded from the die onto a casting drum cooled to a surface temperature of 20°C or more and 60°C or less, and processed into a sheet to form an unstretched film. In particular, setting the casting drum temperature to 40°C or more delays the cooling of the resin and facilitates temporary adhesion to the casting drum, and the characteristics of the extruded resin may suppress degradation of the adhesion between the unstretched film and the casting drum caused by the electrostatic application method described below.

The method of adhering the unstretched film to the casting drum can be suitably selected from the following methods: an electrostatic application method in which the extruded polyester resin is charged using a charging treatment device that applies high voltage, and then adhered to the casting drum; a method in which the polyester resin is sandwiched between a casting drum and a nip roll to adhere to the film; a method in which air pressure is applied to hold down the resin and adhere it to the casting drum; and other method. From the viewpoint of uniform adhesion in the width direction, it is preferable to use the electrostatic application method.

(Sequential biaxial stretching)

For the conditions for biaxially stretching the unstretched polyester film of the present invention, it is preferable to perform the following sequential biaxial stretching. Specifically, as the stretching in the longitudinal direction, it is preferable that the unstretched film first be stretched in the longitudinal direction on a group of rolls heated to 70°C or more, and then cooled on a group of rolls set at a temperature of 20°C or more and 50°C or less. There are no particular restrictions on the lower limit of the heating roll temperature in stretching in the longitudinal direction as long as it does not impair the stretchability of the sheet, but it is preferable that the temperature exceed the glass transition temperature of the resin used. The preferred range of the stretching ratio in the longitudinal direction is 2 times or more and 5 times or less. The more preferred range is 2.5 times or more and 4 times or less When the stretching ratio in the longitudinal direction is 2 times or more, oriented crystallization progresses and film strength can be improved. On the other hand, by setting the stretching ratio to 5 times or less, it is possible to suppress excessively orientated crystallization of the polyester resin during stretching, which leads to brittleness and film breakage during film formation.

The step film (uniaxially oriented film) stretched in the longitudinal direction is then stretched in a direction perpendicular to the longitudinal direction (width direction). It is preferable to guide the uniaxially stretched film to a tenter while holding both ends with clips, and stretch it by 2 times or more and 5 times or less in a direction perpendicular to the longitudinal direction (width direction) in an atmosphere heated to a temperature of 70°C or more and 160°C or less.

Thereafter, the uniaxially stretched polyester film is preferably heat-treated to stabilize the internal oriented structure. The heat history temperature of the polyester film during heat treatment can be confirmed by a temperature of a minute endothermic peak (sometimes referred to as Tmeta) which appears just below the melting point temperature measured by a differential scanning calorimeter (DSC) described later. When polyester (melting point, 255°C) is a main component, the tenter apparatus setting temperature is preferably set such that the maximum temperature inside the tenter is 170°C or more and 245°C or less. When another thermoplastic resin is the main component, it is preferable to set to the temperature equal to or more than the melting point (°C) of the resin minus 45°C, and equal to or less than the melting point (°C) of the resin that is the main component minus 10°C. The dimensional stability of the biaxially oriented polyester film can be improved by setting the heat treatment temperature to 170°C or more. Furthermore, by setting the heat treatment temperature to 245°C or less, the occurrence of film breakage due to melting of the polyester film can be suppressed, and production can be performed with good productivity. From the similar viewpoint, the heat treatment temperature is more preferably in the range of 220°C or more and 235°C or less.

The temperature range of Tmeta, which represents the heat history temperature experienced by the polyester film during heat treatment, is preferably 160°C or more and 235°C or less when the polyester resin is a main component, for the reasons described above. From the similar viewpoint, a more preferable temperature range of Tmeta is 210°C or more and 225°C or less.

After additional heat treatment, relaxation treatment (relax treatment) may be performed in the range of 1% or more and 6% or less for the purpose of imparting dimensional stability. By setting the relaxation treatment to 1% or more, the dimensional stability of the biaxially oriented polyester film can be improved when used in a high temperature environment, and by setting it to 6% or less, an appropriate tension can be continuously applied to the biaxially oriented polyester film, preventing the thickness unevenness from worsening.

The stretching ratio in each of the longitudinal direction and the width direction is set to 2 times or more and 5 times or less, but the area ratio (stretching ratio in longitudinal direction × stretching ratio in width direction) is preferably 4 times or more and 25 times or less, and more preferably 9 or more and 20 times or less. By setting the area ratio to 4 or more, the molecular orientation of the resulting biaxially oriented polyester film can be promoted, improving its durability, and by setting the area ratio to 25 or less, the occurrence of breakage during stretching can be suppressed.

(Layer M: Layer composed of metal and/or metal-based compound)

In the present invention, it is preferable for the polyester film to have a layer (layer M) composed of a metal and/or metal-based compound having a thickness of 0.2 $\mu$m or more and 3.0 $\mu$m or less. It is more preferable for the polyester film to have a layer M having a thickness of 0.2 $\mu$m or more and 3.0 $\mu$m or less on surfaces on both sides of the polyester film. It is even more preferable to have a layer M having a thickness of 0.2 $\mu$m or more and 3.0 $\mu$m or less directly laminated on surfaces on both sides of the polyester film.

By setting the thickness of the layer M of the present invention to 0.2 $\mu$m or more, the degradation of electrical properties in response to the uneven thickness of the metal layer when used as a resin current collector can be minimized, which is preferable. The thickness of the layer M is more preferably 0.5 $\mu$m or more. Furthermore, by setting the thickness of the layer M to 3.0 $\mu$m or less, the increase in the battery weight can be reduced when used as a resin current collector for battery, which is preferable. Furthermore, in a case of producing by vapor deposition, heat defeat during the vapor deposition can be suppressed. The thickness of the layer M is more preferably 2.0 $\mu$m or less.

As the method of providing the layer M, a preferable method (hereinafter, also collectively referred to as vapor deposition method) in which a layer M is provided by metal deposition, metal sputtering, or electroplating under vacuum conditions or reduced pressure conditions filled with an inert gas such as argon gas is used to continuously form the layer M on the polyester film.

In a preferable aspect, when using the vacuum deposition method, a polyester roll is placed in a vacuum chamber in advance, and the unwound polyester film is brought into close contact with a cooling roll while the metal and/or metal compound that has been heated and vaporized is solidified and adhered onto the surface of the polyester film to provide a layer M, and then the film is wound up again into a film roll.

Here, inside the vacuum chamber, vacuum conditions of $9.0 \times 10^{-3}$ Pa or less, or conditions where the chamber is filled with an inert gas such as argon gas and the pressure is reduced to $9.0 \times 10^{-3}$ Pa or more and $1 \times 10^{-1}$ Pa or less is suitably used. The layer M may be formed by continuously performing two or more stages of vapor deposition step, for example by providing a first layer M by sputtering and then providing a second layer M by vacuum deposition.

Examples of the vacuum deposition include induction heating deposition, resistance heating deposition, laser beam deposition, and electron beam deposition. Among them, any of electron beam deposition, laser beam deposition, and induction heating deposition, in which a large amount of heat is generated by the deposition source, may be preferably used. The amount of heat generated by the deposition source needs to be increased until a layer M of the desired thickness is formed, and the substrate surface temperature needs to be sufficiently high. However, because of difficulty in actual measurement, whether a sufficient amount of heat is generated is determined by confirming that the layer M after the vapor deposition has a sufficient thickness.

However, when the amount of heat generated by the deposition source is increased to the required heat level, the temperature of the polyester film rises under the control of the cooling function of a normal vacuum deposition method, and heat damage degrades the mechanical properties of the polyester film, and may also melt the polyester film. Therefore, it is preferable to perform vapor deposition while controlling the cooling function such that the temperature can be prevented from rising too high and the polyester film can be cooled uniformly during the vapor deposition. Specifically, it is required to uniformly cool the film from the rear side of the deposition surface using a cooling mechanism composed of a metal plate or metal roll sufficiently cooled by a refrigerant. To achieve uniform cooling, it is essential that the polyester film and the cooling mechanism adhere to each other without creating gaps between them. The improved adhesion reduces heat damage to the surface of the polyester film, and suppresses degradation of the mechanical properties of the polyester film.

For example, when the metal roll of the cooling mechanism has a flaw, the flawed area will result in a gap, and the polyester film cannot be cooled due to the flawed area, increasing heat damage to the polyester film. Furthermore, when foreign matter gets into the polyester film and the metal rolls of the cooling mechanism, the polyester film cannot be cooled due to the foreign matter, and thermal damage increases. When the amount of heat generated by the deposition source is increased to the required heat level, flaws on the metal roll and foreign matter inclusion, which are tolerated in the normal vacuum deposition methods, become a problem. Therefore, the flaws on the metal roll and foreign matter inclusion must be controlled even more strictly.

When the layer M in the present invention is to have a desired thickness, a method of forming it by a single vapor deposition (a sequence of unwinding, vapor deposition, and winding is defined as single vapor deposition) is preferred from the viewpoints of productivity, resistance characteristics, and grade/quality. For example, thin film deposition may be repeated 20 times (the above sequence is repeated 20 times) to form an aluminum metal layer having a total thickness of 1 $\mu$m, with each vapor deposition forming an aluminum deposition layer having a thickness of 50 nm.

That is, a preferable aspect of the method of producing the laminated polyester film of the present invention is a method of producing a laminated polyester film, including directly depositing a layer composed of a metal and/or metal-based compound and having a thickness of 0.2 $\mu$m or more onto a polyester film that satisfies the following (9) and (10):

(9) a volume resistivity at 23°C and 65 %RH is $1.0 \times 10^8$ $\Omega$cm or more and $9.0 \times 10^{16}$ $\Omega$cm or less; and
(10) a thickness of the polyester film is 1 $\mu$m or more and 30 $\mu$m or less.

From the viewpoint of making the effect of suppressing heat defeat in the polyester film of the present invention more evident, it is preferable to use a roll of polyester film of the present invention and apply the vapor deposition processing by a roll-to-roll method. In addition, when the conveyance speed during the vapor deposition processing is 15 m/min or more, the effect of suppressing heat defeat in the polyester film of the present invention can be more clearly obtained, and the processing cost can be reduced by increasing the processing speed. The conveyance speed is more preferably 25 m/min or more, and still more preferably 35 m/min or more. On the other hand, when the speed is too high, the productivity and heat defeat may worsen. Therefore, the conveyance speed is preferably 500 m/min or less.

Examples of the metal elements constituting the layer M include gold, silver, copper, zinc, lead, nickel, iron, aluminum, titanium, cobalt, manganese, cadmium, and palladium. The layer M may be a metal layer composed of a simple metal element, or a layer composed of a metal compound in which the metal element is mixed with oxygen, nitrogen, fluorine, carbon, boron, chlorine, sulfur, or phosphorus. The metal elements in the layer M directly provided on the polyester film may be the same or different on both sides.

When used as a resin current collector for lithium ion battery, the layer M preferably contains copper or aluminum element, and when used as a resin current collector for negative electrode, the layer M is more preferably composed of copper element.

In the laminated polyester film including a layer M provided on the polyester film of the present invention, it is preferable that the elongation at break in at least one of the in-plane longitudinal direction and the in-plane width direction of the film be 20% or more. By setting at least one of the elongation at break to 20% or more, it is possible to suppress the occurrence of defects in the resin current collector and significant degradation of battery characteristics in a case where the film with the layer M laminated thereon is used as the resin current collector, even when the film is deformed due to external stress. When incorporated in a secondary battery, the current collector is destroyed by deformation in response to the external stress, resulting in degraded battery characteristics or ignition due to thermal runaway. At least one of the elongation at break is more preferably 35% or more, even more preferably 45% or more, particularly preferably 50% or more, and most preferably 70% or more. In addition, at least one of the elongation at break is preferably 120% or less.

When the elongation at break is 120% or less, it is possible to suppress progression of thermal crystallization of the polyester film and the resulting decreased breaking strength in a case where the polyester film is exposed to heat, and destruction of the current collector due to deformation in response to external stress and the resulting degraded battery characteristics or ignition due to thermal runaway in a case where the polyester film is used for the resin current collector or incorporated in a secondary battery.

Examples of the lamination configuration including the polyester film and the layer M of the present invention will be shown below. When the polyester film is a single layer, it is preferable to have a configuration of layer M/layer P1/layer M or a configuration including a layer (layer M') composed of a metal and/or metal-based compound different from that in the layer M: layer M/layer P1/layer M'.

When the polyester film has two or more layers, it is preferably layer M/layer P1/layer P2/layer M, layer M/layer P1/layer P2/layer M', or layer M/layer P2/layer P1/layer P2/layer M, or layer M/layer P2/layer P1/layer P2/layer M'.

The polyester film (layer P1 or layer P2) of the present invention may be provided with an anchor layer for the purpose of improving adhesion to the layer (layer M) composed of a metal and/or metal-based compound, to the extent that the effect of the invention is not lost.

[Monopolar current collector]

A preferable aspect of the case where the polyester film of the present invention is used as the monopolar current collector is a monopolar current collector including a layer having a thickness of 0.2 $\mu$m or more and 3.0 $\mu$m or less and composed of a metal and/or metal-based compound on surfaces on both sides of the polyester film, that satisfies the following (7) and (8):

(7) a thickness of the polyester film is 1 $\mu$m or more and 30 $\mu$m or less; and
(8) the polyester film has a polyester resin layer (layer P1') containing 0.1% by mass or more and less than 5.0% by mass of conductive particles.

The monopolar current collector of the present invention preferably has a resin layer containing 0.1% by mass or more and less than 5.0% by mass of the conductive particles. As the conductive particles, the conductive particles contained in the polyester film can be suitably used as well.

The monopolar current collector of the present invention preferably has a volume resistivity at 23°C and 65% RH of $1.0 \times 10^8$ Ωcm or more and $9.0 \times 10^{16}$ Ωcm or less. By setting the volume resistivity within the above range, the degradation of mechanical properties caused by the provision of the layer M is suppressed, and therefore when incorporated into a secondary battery, the secondary battery can be made resistant to deformation caused by external impact.

That is, in the monopolar current collector of the present invention, elongation at break in at least one of the in-plane longitudinal direction and the in-plane width direction of the film is preferably 50% or more and 120% or less. When the elongation at break in at least one of the in-plane longitudinal direction and the in-plane width direction of the film of the monopolar current collector is 50% or more, it is possible to suppress destruction of the current collector by deformation in response to the external stress, and the resulting degraded battery characteristics or ignition due to thermal runaway in a case where the monopolar current collector is incorporated in a secondary battery. The elongation at break is more preferably 70% or more. When the elongation at break in at least one of the in-plane longitudinal direction and the in-plane width direction of the film is 120% or less, it is possible to suppress progression of thermal crystallization of the polyester film and the resulting decreased breaking strength in a case where the polyester film is exposed to heat, and destruction of the current collector due to deformation in response to external stress and the resulting degraded battery characteristics or ignition due to thermal runaway in a case where the monopolar current collector is incorporated in a secondary battery.

Similarly, in the monopolar current collector of the present invention, breaking strength in at least one of the in-plane longitudinal direction and the in-plane width direction of the film is preferably 180 MPa or more and 300 MPa or less. When the breaking strength in at least one of the in-plane longitudinal direction and the in-plane width direction of the film is 180 MPa or more, it is possible to suppress destruction of the current collector by deformation in response to the external stress, and the resulting degraded battery characteristics or ignition due to thermal runaway in a case where the monopolar current collector is incorporated in a secondary battery. The breaking strength is more preferably 200 MPa or more. When the breaking strength is 300% or less, it is possible to suppress destruction of the current collector due to deformation in response to external stress and the resulting degraded battery characteristics or ignition due to thermal runaway, caused by excessive progression of oriented crystallization in the polyester film, in a case where the monopolar current collector is incorporated in a secondary battery.

In the monopolar current collector of the present invention, from the viewpoint of making the oxidation-reduction potential of the metal and/or metal-based compound fall outside the range of the reaction potential within the battery, the layer M preferably contains aluminum element as a main component in a case of a monopolar current collector for positive electrode, and the layer M preferably contains copper element as a main component in a case of a monopolar current collector for negative electrode. From the viewpoint of productivity, the layer M in the monopolar current collector of the present invention is preferably provided by direct vapor deposition on a polyester film.

In the monopolar current collector of the present invention, the arithmetic average height Sa of the layer M is preferably 15 nm or more and 60 nm or less. When the arithmetic average height Sa of the layer M is 15 nm or more, it is possible to suppress the occurrence of defects on the surface of the layer M due to friction with a step metal roll when conveying the polyester film with the layer M provided thereon, and a degradation of the performance of the secondary battery incorporating the monopolar current collector. Furthermore, by setting the arithmetic average height Sa to 60 nm or less, it is possible to suppress an increase in the resistance of a secondary battery in which the current collector is incorporated, caused by poor contact when an active material described later is provided on the surface of the layer M.

In the monopolar current collector of the present invention, lubricant particles composed of inorganic particles and/or organic particles may be added into the polyester film. The inclusion of lubricant particles reduces friction during the polyester film conveyance step and improves the stability of the step. As lubricant particles, the aforementioned metal compounds, metal oxides, and carbon materials can be used similarly.

In the monopolar current collector of the present invention, the silicon element content is preferably 0 mass ppm or more and 10 mass ppm or less. The method of measuring the silicon content will be described later. In the production of the polyester film, silicon element can be introduced by using lubricant particles containing silica as a main component. By setting the silicon element content to 10 mass ppm or less, the degradation of the mechanical properties of the monopolar current collector having the layer M described above can be suppressed. This is because the silica particles contained in the polyester film have a low thermal expansion coefficient. Specifically, when the vapor deposition processing is performed, the polyester film expands due to the heat it receives, and the difference in thermal expansion coefficient between the polyester resin and the silica particles becomes larger, causing delamination at the interface between the polyester resin and the silica particles, which results in void defects in the film. In addition, when the monopolar current collector of the present invention is incorporated into a lithium ion battery, the silicon element generated by partial reduction of silica in the polyester film can be prevented from irreversibly reacting with and bonding to lithium ions, thereby suppressing a degradation of battery characteristics.

[Power storage device]

The power storage device of the present invention is composed of an electrode assembly including a positive electrode and a negative electrode. It may contain an electrolytic solution, in which case it is preferable to include a separator interposed between the positive electrode and the negative electrode. A power storage device composed of a solid electrolyte that does not contain an electrolytic solution is also a preferred example. The power storage device may also include a battery case that houses the electrode assembly.

Examples of application of such power storage devices include primary batteries, secondary batteries, electric double layer capacitors, and aluminum electrolytic capacitors. In the present invention, the power storage devices refer to the power storage devices for secondary batteries.

Examples of the secondary batteries include lithium secondary batteries, lead storage batteries, nickel-cadmium batteries, nickel-hydrogen batteries, nickel-iron storage batteries, silver oxide-zinc storage batteries, manganese dioxide-lithium secondary batteries, lithium cobaltate-carbonate secondary batteries, and vanadium-lithium secondary batteries.

Among them, secondary batteries are preferred because they can be used for a long period of time, and lithium secondary batteries that realize high energy density by using organic solvents are more preferred.

As the battery case, for example, an aluminum case, an iron case with a nickel-plated inner surface, or a case made of an aluminum laminate film can be used.

The shape of the battery case may be a pouch type, a cylindrical type, a square type, a coin type, or the like. Among them, the pouch type is preferred because it can realize a high energy density, and the shape can be freely designed at low cost.

The positive electrode includes a positive electrode material composed of an active material, a binder resin, and a conductive assistant laminated on a current collector. Examples of the active material include lithium-containing transition metal oxides with layered structures such as $LiCoO_2$(LCO), $LiNiO_2$, $LiNiCoMnO_2$ (NCM), and $LiNiCoAlO_2$ (NCA); spinel-type manganese oxides such as $LiMn_2O_4$; iron-based compounds such as $LiFePO_4$ (LFP) and LFMP which is LFP partially substituted with magnesium; olivine-type compound such as $LiMnPO_4$ (LMP), $LiCoPO_4$ (LCP), and $LiNiPO_4$ (LNP); and sulfur-based compounds. As the binder resin, a resin having high oxidation resistance may be used. Specific examples include fluorine-containing resins, acrylic resins, and styrene-butadiene resins. Specific examples of the conductive assistant include carbon materials, for example, carbon black such as acetylene black and furnace black, and graphite.

As a current collector, a metal foil or a resin film having a metal layer can be used, and for a metal foil, in particular, aluminum foil is often used. It is particularly preferable to use the monopolar current collector of the present invention.

The negative electrode includes a negative electrode material composed of an active material and a binder resin laminated on a current collector. Examples of the active materials include carbon materials such as artificial graphite, natural graphite, hard carbon, and soft carbon, lithium alloy-based materials such as tin and silicon, metallic materials such as lithium, and lithium titanate ($Li_4Ti_5O_{12}$). Example of the binder resin include fluorine-containing resins, acrylic resins, and styrene-butadiene resins. As a current collector, a metal foil or a resin film having a metal layer can be used, and for a metal foil, in particular, copper foil is often used. However, it is particularly preferable to use the monopolar current collector of the present invention.

When a liquid electrolyte (electrolytic solution) is used in a lithium ion battery or the like, an olefinic film such as polyethylene or polypropylene may be used as a separator to separate the positive electrode from the negative electrode.

Both electrolyte and solid electrolyte can be used as the electrolyte of the power storage device.

When the power storage device of the present invention contains an electrolytic solution, the electrolytic solution is the place where ions are transferred between a positive electrode and a negative electrode in an electrochemical device such as a secondary battery, and the electrolytic solution has a configuration in which an electrolyte is dissolved in an organic solvent.

Examples of the electrolyte include $LiPF_6$, $LiBF_4$, and $LiClO_4$, and $LiPF_6$ is preferably used from the viewpoint of solubility in organic solvents and ionic conductivity.

Examples of the organic solvents include ethylene carbonate, propylene carbonate, fluoroethylene carbonate, dimethyl carbonate, diethyl carbonate, and ethyl methyl carbonate, and a mixture of two or more of these organic solvents may be used.

When the power storage device of the present invention contains a solid electrolyte, the solid electrolyte such as a sulfide-based solid electrolyte which is a crystalline or glassy body containing elements such as phosphorus, silicon, chlorine, or tin in addition to lithium and sulfur, or an oxide-based solid electrolyte which is a crystalline or glassy body containing elements such as lanthanum, titanium, aluminum, germanium, or zirconium in addition to lithium and oxygen can be used.

A method of producing a lithium secondary battery, which is preferably used among the power storage devices, will be described below.

The method of producing a lithium secondary battery is to first disperse an active material and a conductive assistant in a binder resin solution to prepare a coating liquid for electrodes, and then coat this coating liquid on a current collector and dry the solvent to obtain a positive electrode and a negative electrode. The film thickness of the coating film after drying is preferably 50 μm or more and 500 μm or less. In a more preferred aspect, the active material layer for positive electrode is preferably 90 μm or more and 120 μm or less. The active material layer for negative electrode is preferably 100 μm or more and 170 μm or less. By setting the thicknesses of the active material layers for the positive electrode and the negative electrode within the above-mentioned ranges, a high-capacity secondary battery can be produced. Here, since the polyester film and monopolar current collector of the present invention have excellent mechanical properties, electrode processing can be performed without problems even when the thickness of the active material layer is increased and the amount of heat required for drying is increased, or when high-pressure roll pressing is performed to increase the density of the active material layer.

Furthermore, it is preferable to apply pressure to the active material layer formed on the current collector, preferably by a roll press method or the like, to densify it and make the current collector into a thin film.

A separator for lithium secondary battery is placed between the obtained positive and negative electrodes so as to be in contact with the active material layer of each electrode, and enclosed in an exterior material such as an aluminum laminate film. After injecting the electrolytic solution, a negative electrode lead and a safety valve are installed, and the exterior material is sealed.

The lithium secondary battery thus obtained has high adhesion to the electrode and excellent battery characteristics, and can be produced at low cost.

[Secondary battery]

The power storage device produced by the aforementioned method or the like may be used as a secondary battery by connecting a plurality of power storage devices in series to meet the application of the power storage devices and the required battery capacity. In such cases, the secondary battery is preferably equipped with voltage control, temperature control, and safety devices. A preferred example of the battery is one in which the power storage devices are connected to each other with tab lead wires (current extraction wires) and housed in a resin or metal module case for use as a secondary battery.

In a preferable aspect of the secondary battery of the present invention is a secondary battery including a current collector having a layer (hereinafter referred to as layer M) composed of a metal and/or metal-based compound and having a thickness of 0.2 μm or more and 3.0 μm or less on surfaces on surfaces on both sides of a polyester film that satisfies the following (1) and (2):

(1) a thickness of the polyester film is 1 μm or more and 30 μm or less; and
(2) the polyester film has a resin layer containing 0.1% by mass or more and less than 5.0% by mass of conductive particles.

In the secondary battery of the present invention, it is more preferable that the thickness of the current collector is 4 μm or more and 7 μm or less. When a current collector has a thickness of 4 μm or more, a degradation of the mechanical properties of the battery can be suppressed, and when a current collector has a thickness of 7 μm or less, the effect of reducing the weight of the battery can be obtained.

The secondary battery of the present invention preferably has a configuration in which 45 or more and 80 or less layers of the current collectors are laminated, more preferably has a configuration in which at least 45 or more and 80 or less layers of the current collectors are laminated with an active agent layer described below interposed therebetween. The secondary battery can increase its battery capacity by including at least 45 or more and 80 or less layers, but the size of the secondary battery can be reduced by using the current collector of the present invention. The lamination configuration may be a configuration in which 45 or more layers of the current collector are laminated with a lamination configuration (hereinafter referred to as active agent layer) including a positive-electrode active material layer and a negative-electrode active material layer interposed therebetween, or a configuration in which an active agent layer is disposed between two sheets of current collectors, and wound such that 45 or more layers of the current collectors are laminated from the center of the winding. The number of lamination used herein refers to the number of lamination of a single current collector including a polyester film and a layer M, the current collectors laminated with an active agent layer interposed therebetween, regardless of a positive electrode or a negative electrode. For example, a configuration of current collector/active agent layer/current collector is a two-layer configuration, and a current collector/active agent layer/current collector/active agent layer/current collector configuration is a three-layer configuration. In addition, in the active agent layer configuration, a separator may be provided between the positive-electrode active material layer and the negative-electrode active material layer. When the electrolyte is a solid electrolyte and a separator is not included in the battery configuration, the active agent layer is a layer composed of the positive-electrode active material layer and the negative-electrode active material layer.

In the secondary battery of the present invention, it is preferable that the current collector is a current collector in which the active material layer is laminated directly onto the surface of the layer M, from the viewpoint of minimizing the resistance inside the battery and improving the battery output.

The thickness of the current collector is preferably 0.01 times or more and 0.04 times or less the thickness of the active agent layer. By using the laminated polyester film of the present invention which has excellent mechanical properties, a thick active material layer can be formed on a thin film, achieving both high capacity and mechanical strength. Here, the thickness of the active layer is a distance between one current collector and the nearest single current collector that is laminated, with one positive-electrode active material layer and one negative-electrode active material layer interposed therebetween. Specifically, it is the sum of the total thickness of the positive-electrode active material layer and the negative-electrode active material layer, and if a separator is present between the positive-electrode active material layer and the negative-electrode active material layer, it is the thickness of the separator. The thickness of the current collector is the total thickness of the polyester film and the metal layers on both sides. When the thickness of the positive-electrode current collector and the thickness of the negative-electrode current collector are different, the average value of the thicknesses of the positive-electrode current collector and the negative-electrode current collector is taken as the current collector thickness.

It is preferable that the secondary battery of the present invention have a joint with one electrode tab in a configuration in which at least 45 or more and 80 or less layers of the current collector are laminated, and the joint have depressions with a depth of 0.1 mm or more and 1.0 mm or less at intervals of 0.3 mm or more and 0.8 mm or less. As a method of providing the aforementioned joint, a known technique such as resistance welding, laser welding, or ultrasonic bonding can be used. The ultrasonic bonding method is preferred in that it minimizes thermal damage to the film. The shape of the joint is preferably a depressed shape having a depth of 0.4 mm or more and 1.0 mm or less at intervals of 0.3 mm or more and 0.8 mm or less. When the depth of the depressed shape is 0.1 mm or more, it is possible to bond at least 10 of the current collectors at once, and when the depth of the depressed shape is 1.0 mm or less, breakage of the electrode tab can be suppressed. Furthermore, when the interval between the depressions is 0.3 mm or more, it is possible to suppress breakage of the resin current collector, caused by depressions getting closer and connecting to each other. In addition, by setting the interval between the depressions of the current collector to 0.8 mm or less, it is possible to suppress increase in the resistance of the joint of the current collector and degradation of the battery characteristics of the secondary battery in which the current collector is to be incorporated. The number of recesses is not particularly limited, but it is preferable that there are at least 16 depressions at the joint with the electrode tab.

In the secondary battery of the present invention, since conductive particles are contained in the polyester film, an increase in the resistance of the joint can be suppressed even when a small amount of polyester film remains at the time of forming the depressions in the joint, and thus it is possible to bond more current collectors to the electrode tab at one time.

In the secondary battery of the present invention, D1/D2 is preferably 0.9 or more and 1.2 or less, where D1 ($\mu$m) is a thickness of the end part of the current collector, and D2 ($\mu$m) is a thickness of the current collector at a position 20 mm inward from the end part of the current collector. Here, the thickness of the end part refers to the thickness at the position 3 mm inward from the outermost end part of the current collector. The thickness ratio D1/D2 represents the thickness uniformity at the end part of the current collector. When D1/D2 is 0.9 or more and 1.2 or less, the uniformity at the end portion is high. Therefore, it is possible to prevent the end part from becoming specifically thicker when a plurality of layers are laminated. High uniformity at the end part suppresses occurrence of defects in the current collector caused by stress concentration at the end part during the step in which the current collector and the lubricant layer are laminated and wound, and then pressed for shaping, and suppresses occurrence of defects in the current collector caused by stress concentration at the end part when the secondary battery incorporating the current collector is bent for a durability test. The D1/D2 is more preferably 0.95 or more and 1.1 or less. A method of controlling the D1/D2 within the above range is to adjust the breaking strength of the polyester film of the present invention within the above range. By controlling the breaking strength, deformation in the thickness direction can be suppressed, and the occurrence of bulging at the end part during slit processing can be suppressed.

In the secondary battery of the present invention, the current collector is preferably a current collector in which the layer M contains aluminum element, and a positive-electrode active material layer having a thickness of 90 $\mu$m or more and 120 $\mu$m or less is laminated on the surface of the layer M containing aluminum element, from the viewpoint of increasing battery capacity of the secondary battery into which the current collector is to be incorporated, by increasing the capacity of the positive-electrode active material.

In the secondary battery of the present invention, the current collector is preferably a current collector in which the layer M contains copper element, and a negative-electrode active material layer having a thickness of 80 $\mu$m or more and 170 $\mu$m or less is laminated on the surface of the layer M containing copper element, from the viewpoint of increasing battery capacity of the secondary battery into which the current collector is to be incorporated, by increasing the capacity of the negative-electrode active material.

In the secondary battery of the present invention, the total content of furnace black and Ketjen black contained in the electrolytic solution is preferably 0.001 mass ppm or more and 100 mass ppm or less. The content of 100 mass ppm or less indicates that leakage of the carbon material contained in the polyester film into the electrolytic solution is suppressed.

By including the furnace black and Ketjen black in the electrolytic solution, the movement of lithium ions in the electrolytic solution can be inhibited, thereby preventing the decrease in battery capacity. In particular, when the battery is left in an environment exceeding 30°C for a long time, the carbon material in the polyester may leak over time, causing a non-negligible decrease in battery capacity.

[Electric vehicle]

The secondary battery produced by the aforementioned method or the like is one of the preferred forms to be mounted in an electric vehicle due to its excellent battery characteristics and durability. An electric vehicle is a vehicle in which some or all of the driving energy required while traveling is supplied from a secondary battery. Types of electric vehicles include BEVs (Battery Electric Vehicles), which are powered only by secondary batteries, and HEVs (Hybrid Electric Vehicles) and PHEVs (Plug-in Hybrid Electric Vehicles), which are powered by both fossil fuels such as gasoline and secondary batteries. The secondary battery of the present invention can be suitably used in any of these applications.

[Electric flying object]

The secondary battery produced by the aforementioned method or the like is one of the preferred forms to be mounted in electric vehicles due to its excellent battery characteristics and durability. An electric flying object is a flying object in which some or all of the driving energy required while flight is supplied from a secondary battery. Specific examples include electric aircraft such as drones, high-altitude platform systems (HAPS), air metro, and air taxi. The secondary battery of the present invention can be suitably used in any of these applications.

[Method of evaluating characteristics]

A. Polymer characteristics

Regarding the polymer characteristics, a polyester resin is used as an example, but the resin that is the main component of the polyester film in the present invention is not limited to the case.

(i) Intrinsic viscosity (IV)

A measurement sample (polyester resin (raw material) or a polyester film of the present invention) is dissolved in 100 ml of orthochlorophenol (solution concentration C (weight of measurement sample/volume of solution) = 1.2 g/100 ml), and the viscosity of the solution at 25°C is measured using an Ostwald viscometer. Similarly, the viscosity of the solvent is measured. The obtained solution viscosity and solvent viscosity are used to calculate [η] according to the following formula (1), and the obtained value is regarded as the intrinsic viscosity (IV) of the entire polyester film.

$$\eta sp/C = [\eta] + K[\eta]^2 {*}C \cdots(1)$$

(where $\eta sp$ = (solution viscosity/solvent viscosity) - 1, and K is the Huggins constant (assumed to be 0.343)).
When the solution in which the measurement sample is dissolved contains insoluble matters such as inorganic particles, the measurement is performed using the following methods.

(1-1) The measurement sample is dissolved in 100 mL of orthochlorophenol to prepare a solution with a concentration of more than 1.2 g/100 mL. Here, the weight of the measurement sample subjected to orthochlorophenol is regarded as the weight of the measurement sample.
(1-2) Next, the solution containing insoluble matter is filtered, and the weight of the insoluble matter and the volume of the filtrate after filtration are measured.
(1-3) Orthochlorophenol is added to the filtrate after filtration such that (weight of measurement sample (g) - weight of insoluble matter (g))/(volume of filtrate after filtration (mL) + volume of added orthochlorophenol (mL)) becomes 1.2 g/100 mL.
((For example, when a concentrated solution with a sample weight of 2.0 g per 100 mL of solution is prepared, and the weight of insoluble matter is 0.2 g upon filtration of the solvent and the volume of the filtrate after filtration is 99mL, 51mL of orthochlorophenol is added for adjustment. ((2.0 g - 0.2 g)/(99 mL + 51 mL) = 1.2 g/100 mL))
(1-4) The solution obtained in (1-3) is used to measure the viscosity at 25°C using an Ostwald viscometer, and the solution viscosity and solvent viscosity obtained are used to calculate [η] according to the above formula (1), and the obtained value is regarded as the intrinsic viscosity ($IV_F$) of the entire polyester film.

B. Evaluation of film formability

(i) Evaluation of extrusion stability during extrusion

In the production step of the polyester film of the present invention, a 10 m unstretched film roll is collected for the unstretched film obtained by melt-extrusion through a die and cooling and forming into a sheet using the electrostatic application method on a casting drum. The thickness unevenness in the longitudinal direction when 10 m of the unstretched film produced by the above-described method is sampled is evaluated as follows. The thickness at the center of the 10 m sheet sampled is measured every 50 cm in the longitudinal direction, and the difference between the maximum and minimum values obtained is divided by the average thickness at the center of the 10 m sheet to obtain a percentage value, which is used as the thickness unevenness (%).

A: The thickness unevenness of the unstretched film is less than 10%.
B: The thickness unevenness of the unstretched film is 10% or more and less than 20%.
C: The thickness unevenness value of the unstretched film is 20% or more.

As for discharge stability, A and B are good, and A is the best among them.

(ii) Evaluation of stretchability

Stretching during the film formation of the polyester film of the present invention is performed by the method described in the section (Sequential biaxial stretching). The number of times that the film breaks during sampling of the 4000-m biaxially oriented polyester film produced by the above method was evaluated as follows.

A: The number of times the film breaks is less than three times.
B: The number of times the film breaks is three times or more and less than ten times.
C: The number of times the film breaks is ten times or more.

As for stretchability, A and B are good, and A is the best among them.

C. Film thickness

(i) Film thickness T

The total thickness of the polyester film is measured using a dial gauge at five arbitrary points on ten stacked films in accordance with JIS K7130 (1992) A-2 method. The average value is divided by 10 to obtain the thickness T ($\mu$m) of the film.

(ii) Multilayer thickness ($T_{P1}$, $T_{P2}$, $T_M$)

A cross-section of the polyester film or laminated polyester film of the present invention is cut out with a microtome in a direction parallel to the width direction of the polyester film. The cross-section is subjected to a sputtering treatment using platinum-palladium, and then observed at a magnification of 5,000 to 20,000 times using a scanning electron microscope (JSM-6700, manufactured by the JEOL Ltd.) under conditions of applying an accelerating voltage of 3kV to determine the thickness ratio of the layers (layer P1, layer P2) constituting the laminated film and the layer M. The thickness of each layer ($T_{P1}$, $T_{P2}$, $T_M$) is calculated from the multilayer ratio thus determined and the total film thickness obtained in the subsection (i) above.

(iii) Thickness D1 of end part of current collector end, and thickness D2 at position 20 mm from end part of current collector

In the same manner as in the subsection (i) above, the thicknesses of the polyester film is measured using a dial gauge at five arbitrary points located 3 mm inward from the end part on ten stacked current collectors in accordance with JIS K7130 (1992) A-2 method. The average value is divided by 10 to obtain the thickness D1 ($\mu$m) of the end part of the current collector. Similarly, the thickness is measured at arbitrary five points located 20 mm inward from the end part, and the average value is divided by 10 to obtain the thickness D2 ($\mu$m) at the position 20 mm inward from the end part of the current collector.

D. Constituent element of layer composed of metal and/or metal-based compound

After sputtering the surface of the laminated polyester film of the present invention with platinum-palladium, the metal species of the metal layer provided on the surface of the laminated polyester film of the present invention is identified by energy dispersive X-ray spectroscopy (EDX). The EDX (manufactured by Oxford Instruments plc/AZtecLive Standard UltimMax65) used in this analysis is attached to a scanning electron microscope (manufactured by JEOL Ltd./JSM-6700F type).

Measurements are performed with the acceleration voltage varied from 0.5 kV to 30 kV, and the detected elements are regarded as elements constituting the layer M. In this case, platinum and palladium are excluded, and when only platinum or palladium is detected through measurements at all accelerating voltages, these are regarded as elements constituting the metal and/or metal compound layer (layer M).

E. Measurement of volume resistivity of film

The volume resistivity of the polyester film of the present invention is measured using a high resistivity meter (High Resistivity Meter Hiresta-UX, manufactured by Nittoseiko Analytech Co., Ltd.). The measurement is performed using as the electrode unit a J-box X type electrode in accordance with JIS K6911. The measurement mode is volume resistivity measurement mode (unit: $\Omega$cm), and the film thickness of the sample is input into the high resistivity meter for measurement. The polyester film of the present invention is cut into 100 mm square samples in accordance with JIS K6911. The applied voltage and voltage application time are the values after maintaining a voltage of 500 V applied for 1 minute in accordance with JIS K6911, and the measurement is performed three times using different samples, and the average value is taken as the volume resistivity of the polyester film.

When the volume resistivity becomes "UNDER" (below the lower limit of resistivity measurement) even once with the above voltage or application time, the applied voltage is changed to 10 V and measurement is performed under the condition of maintaining the voltage for 1 minute. The measurement is performed three times using different samples, and the average value is regarded as the volume resistivity of the polyester film. The measurement is performed in an environment of 23°C and 65% RH.

F. Carbon material content

The layer P1 or layer P2 of the polyester film of the present invention is placed in 200 ml of hexafluoroisopropanol (HFIP) to dissolve the polyester resin. After dissolution is completed, 200 ml of water is added to the solution, the liquid is then centrifuged to settle the particles, and the supernatant is removed. The particles are washed with additional water and centrifuged twice. The particles thus obtained are dried and their mass is measured to calculate the particle content (% by mass) in each layer. The above-mentioned procedure is performed for three different locations of the polyester film of the present invention, and the content of the particles thus obtained is taken as the content concentration of the carbon material contained in the sample.

The carbon material content of the electrolytic solution in the secondary battery of the present invention is also measured in the same manner as in the above method.

G. Identification of carbon species

The carbon particles obtained in the above section F are subjected to Raman spectroscopy to observe peaks around 1580 cm$^{-1}$ derived from the graphite structure (sp$^2$ bond), generally referred to as the G band, and around 1350 cm$^{-1}$ derived from the diamond structure (sp$^3$ bond), generally referred to as the D band, and identified based on the intensity ratio of these peaks. The identification is based on comparison with known Raman spectral databases and peak intensity data obtained from measurements of commercially available carbon materials. In addition, the carbon material obtained in the above subsection (i) is observed by a transmission electron microscope (TEM) at a magnification of 50,000 to 500,000 times to observe the resulting shape, which is combined with the results of the Raman spectroscopy in the previous section to identify the type of carbon material present in the sample. When a plurality of carbon materials are observed, the number of each carbon material observed by the TEM is converted into a volume ratio, which is regarded as the abundance ratio of each carbon material.

H. Quantitative measurement of silicon element

The polyester film contained in the monopolar current collector of the present invention is measured by ICP emission spectrometry. The metal layer laminated on the polyester film is removed by a known method such as acid treatment, and then quantitative measurement is performed.

<Analysis conditions>

Apparatus: ICP emission spectrophotometer (manufactured by Hitachi High-Tech Science Corporation) PS3520VDDII

Sample preparation: The polyester film is weighed into a beaker, pressure-decomposed with sulfuric acid, followed by nitric acid, and then heated and incinerated. The ash is melted with a melting mixture of sodium carbonate and boric acid, and heated and melted with dilute nitric acid to a constant volume of 10mL. The amount of silicon element in the solution diluted with dilute nitric acid is then measured by inductively coupled plasma-atomic emission spectrometry to determine the amount of the silicon element in the polyester film.

(Measurement conditions)

Measurement wavelength: 251.6 nm
High frequency output: 1.2 kW
Plasma gas flow rate: 16 L/min
Auxiliary gas flow rate: 0.5 L/min
Carrier gas flow rate: 0.9 L/min
Photometry height: 12 mm.

H. Quantitative analysis of resins constituting polyester film

Measurement samples are taken from the entire layer, the layer P1, and the layer P2 of the polyester film of the present invention, and the measurement samples are immersed in 1,1,1,2,2,2-hexafluoro-2-isopropanol (HFIP), the soluble portion is separated by centrifugation, and the supernatant is collected to extract the resin component contained in the polyester film. The extract is subjected to measurement by matrix-assisted laser desorption/ionization mass spectrometry (MALDI-MS). The structure of the compound contained is identified from the obtained mass spectra and the spectra of the nuclear magnetic resonance method ($^1$H-NMR) described below.

Fifty milligrams of the entire layer, layer P1, or layer P2 of the polyester film of the present invention is weighed, and 2.63 mg of octamethylcyclotetrasiloxane (OMTS) is added as an internal standard substance. 0.7 ml of deuterated 1,1,1,2,2,2-hexafluoro-2-isopropanol (HFIP-d$_2$) is added to dissolve the soluble portion, followed by centrifugation. The supernatant from the centrifugation is collected and measured by nuclear magnetic resonance ($^1$H-NMR). The compounds contained in the sample are quantified from the ratio of the NMR spectrum area of the added internal standard material to the spectrum area of the extract.

($^1$H-NMR measurement conditions)

Apparatus used: ECA-400 (manufactured by JEOL RESONANCE Co., Ltd.)
Measurement method: Single pulse
Observed frequency: 399.8 MHz
Pulse width: 6.45 s (45 pulses)
Lock solvent: HFIP-d$_2$
Chemical shift standard: Deuterated solvent residual proton (4.41 ppm)
Observed width: about 8000 Hz (about - 2 ppm to 18 ppm)
Number of data points: 32768
Waiting time: 30 seconds
Cumulative number: 128 times
Measurement temperature: Room temperature (21°C)
Sample rotational frequency: 15 Hz.

I. DSC measurement

The polyester film of the present invention or its raw material is measured using a Thermo Plus Evo2 series DSC Vesta manufactured by the Rigaku Corporation as a differential scanning calorimeter (DSC). Approximately 5 mg of a sample is placed on an aluminum tray and heated from room temperature to 300°C at a heating rate of 20 °C /min and held for 5 minutes (1st Run measurement). The temperature of the exothermic peak originating from the glass transition observed at that time is designated as a glass transition temperature (Tg), and the peak temperature of the endothermic peak of melting is designated as a melting point (Tm), and the average values of the three measurements are designated as the glass transition temperature (Tg) and the melting point (Tm) of the sample.

In the DSC chart of the polyester film of the present invention, when it is difficult to distinguish from the minute endothermic peak Tmeta that appears immediately before the melting point, the following measurement is performed in addition to the above-mentioned 1st Run measurement. The temperature is raised to 300°C at a heating rate of 20 °C/min and held for 5 minutes, then quenched using liquid nitrogen, and again raised to 300°C at a heating rate of 20 °C/min (2nd Run measurement). The number and temperature of the melting point peaks are confirmed, and the peak that disappears from the 1st Run measurement is regarded as a minute endothermic peak Tmeta that appears immediately before the melting point temperature, and is excluded from the 1st Run measurement data.

J. Relative permittivity

A sample measuring 35 mm in the longitudinal direction $\times$ 35 mm in the width direction is cut out from the polyester film. The cut sample is clamped such that the longitudinal direction of the sample corresponds to the longitudinal direction of the sample holder, and measurements are performed using a molecular orientation meter (MOR-7015, manufactured by Oji Scientific Instruments Co., Ltd.). The measurement frequency is set to 15 GHz using a signal generator (E8257D, manufactured by Keysight Technologies). By entering the following measurement conditions and sample thickness in the measurement control software "MOR-7000", the permittivity $\varepsilon$" and dielectric loss $\varepsilon$" in the directions where the measurement angle is 0° (longitudinal direction of sample), 30°, 60°, 90°, 120° and 150° are obtained. The average values of the permittivity $\varepsilon'$ and dielectric loss $\varepsilon$" in each measurement direction obtained are taken as the permittivity $\varepsilon'$ and dielectric loss $\varepsilon$" of the measured sample, respectively, and the relative permittivity $\varepsilon_r$ is obtained according to the following formula (2).

$$\varepsilon_r = \{(\varepsilon')^2 + (\varepsilon'')^2\}^{0.5} \cdots \text{ formula (2)}$$

The above operation is performed on samples cut out from two different locations of the polyester film, and the average value of the relative permittivity obtained is taken as the relative permittivity of the polyester film.

(Measurement conditions)

Measurement mode: Permittivity pattern measurement
Measurement angular interval $\theta$: 30°
[Method of evaluating application characteristics]

A. Vacuum deposition processing

The polyester film roll of the present invention is placed in a roll-type vacuum evaporation system (EWC-060, manufactured by ULVAC, Inc.), and a copper or aluminum ingot is heated by induction heating deposition using a carbon crucible at a conveyance speed under output conditions such that a metal layer having a predetermined thickness is obtained, thereby performing vacuum deposition to form a metal layer. The processing is performed at a conveyance speed of 20 m/min. Next, a roll of the polyester film having a metal layer on one side thereof is placed again in the roll-type vacuum evaporation system (EWC-060, manufactured by ULVAC, Inc.), and a copper or aluminum ingot is heated by the induction heating deposition method employing a carbon crucible to provide a metal layer by the vacuum deposition method on the surface of the polyester film opposite to the surface on which the metal layer is provided. At this time, the conveyance speed and output conditions are adjusted such that the metal layer has a predetermined thickness, and vacuum deposition is performed.

B. Mechanical characterization of laminated polyester film or monopolar current collector with surface metal layer

The elongation at break of the laminated polyester film or monopolar current collector having metal layers on both sides produced by the vacuum deposition processing method described in the preceding section A was measured. A sample is cut out longitudinally from the laminated polyester film or monopolar current collector with surface metal layer on both sides into a rectangular shape measuring 150 mm long and 10 mm wide. According to the following method specified in ASTM-D882, a tensile test is performed using an Instron type tensile tester (AMF/RTA-100 manufactured by ORIENTEC CO., LTD.) with a sample film having a width of 10 mm set such that the length between chucks is 50 mm, at a tensile speed of 300 mm/min. The measurement is carried out five times, and the average values of the elongation at break and strength at break are regarded as the elongation at break and breaking strength of the polyester film.

When the longitudinal direction and the width direction of the laminated polyester film with the metal layer on both sides are unknown, the elongation at break and breaking strength are measured with respect to four directions: a specific direction and in-plane 45°, 90°, and 135° rotated directions from the specific direction. The maximum values of the elongation at break and breaking strength in the four directions thus obtained are taken as the elongation at break and breaking strength of the polyester film for which the aforementioned longitudinal direction and the width direction are unknown.

C. Arithmetic average height of monopolar current collector

The arithmetic mean height (in accordance with ISO 25178) of the surface of the metal layer of a monopolar current collector with metal layers on both sides was measured. A sample is cut out longitudinally from monopolar current collector into a rectangular shape measuring 60 mm long and 60 mm wide.

For the cut sample, the surface of the sample is subjected to 90 fields of view measurement using a scanning white light interference microscope (apparatus: "VertScan" (registered trademark) VS1540, manufactured by Hitachi High-Tech Science Corporation), with $50\times$ objective lens, the measurement mode set to WAVE mode, and measurement area of 113 $\mu$m $\times$ 113 $\mu$m. The sample set is measured by setting the sample on the stage such that the measurement Y axis corresponds to the longitudinal direction of the sample. In a case of the samples whose the longitudinal direction is not known, the measurement is made such that the measurement Y-axis corresponds to any one direction in the film, followed by a measurement such that the measurement Y-axis corresponds to the direction rotated 120 degrees, followed by a such that the measurement Y-axis corresponds to the direction further rotated 120 degrees, and the average of the results of each measurement is taken as the arithmetic average height of the surface to be measured. The sample to be measured is sandwiched between two metal frames with rubber gaskets to keep the film tight in the frames (sagging or curling of the sample being eliminated), and the sample surface is measured.

The obtained microscopic image is subjected to image processing using surface analysis software VS-Viewer Version 10.0.3.0 built in the microscope under the following conditions to determine the arithmetic average height.

(Image processing conditions)

Image processing is performed in the following order.

·Interpolation processing: Full interpolation
·Filtering: Median (3 $\times$ 3 pixels)
·Plane correction: fourth order.

Scanning white light interference microscope measurements are performed on surfaces on both sides of the monopolar current collector, each with 90 fields of view. For each measurement image that has been subjected to the above-described image processing, in the "ISO parameter" analysis in the surface analysis software, "Height Parameters" is selected along with the following analysis conditions, and the obtained numerical values are output into the parameter sheet column to determine the arithmetic average height Sa (nm), and the average value of 180 fields of view (90 fields of view $\times$ both sides) is taken as the arithmetic average height Sa (nm) of the measurement surface.

(ISO parameter analysis conditions)

The ISO parameter analysis processing is performed under the following conditions.

·S-Filter: Automatic
· Normal probability paper
Number of divisions: 300
Upper limit of calculation range: 3.000
Lower limit of calculation range: -3.000
·Parameter: Only "Height Parameters" is selected
·Output: "Parameter list" is selected

(Parameter sheet output)

By selecting "Height Parameters" in the "ISO parameters" window displayed by the ISO parameter analysis and executing "Add to parameter sheet", "Sa [μm]" displayed in the "ISO parameters" tab in the "parameter sheet" window is converted to nm unit and used.

(Reference height: zero plane (average plane))

As the "zero plane (average plane)" in setting the reference height (height 0 nm) described above, the plane of the "average height (Ave)" automatically determined from the following formula in the measurement image (113 μm × 113 μm) obtained by observing a microscopic image by the method described above and applying image processing described above.

[Math. 1]

$$\text{Average height(Ave)} = \frac{1}{\text{lx} \cdot \text{ly}} \iint \text{h(x, y)} \, dx \, dy$$

·lx: length of range in X direction in each measurement image subjected to the above-mentioned image processing
·ly: length of range in Y direction in each measurement image subjected to the above-mentioned image processing
·h(x,y): Height at each image point (x, y) in measurement image subjected to the above-mentioned image processing

D. Evaluation of resin current collector

(i) Production of resin current collector

A laminated polyester film is prepared by providing a metal layer on both sides of the polyester film of the present invention by the method described in the section A. Vacuum vapor deposition processing to prepare a resin current collector for negative electrode and a current collector for resin for positive electrode. Copper is used as the metal species for the resin current collector for negative electrode, and aluminum is used as the metal species for the current collector for resin for positive electrode.

(ii) Active material for positive electrode and active material for negative electrode

A positive-electrode active material slurry is prepared by mixing 85% by mass of $LiMn_2O_4$ as a positive-electrode active material, 5% by mass of acetylene black as a conductive assistant, 10% by mass of polyvinylidene fluoride (PVDF) as a binder, and an appropriate amount of N-methyl-2-pyrrolidone (NMP) as a slurry viscosity adjusting solvent.
A negative-electrode active material slurry is prepared by mixing 90 parts by mass of hard carbon as a negative-electrode active material, 5 parts by mass of acetylene black as a conductive assistant, 10 parts by mass of PVDF as a binder, and an appropriate amount of NMP as a slurry viscosity adjusting solvent.

(iii) Production of battery evaluation cell

<Production of cell for battery evaluation>

Two rectangular glass epoxy substrates ("NIKOLYTE" (registered trademark) NL-EG-23N, manufactured by NIKKO KASEI CO., LTD.) with external dimensions of 105 mm width × 205 mm length were prepared, the inside of each was hollowed out leaving a 15 mm wide outer periphery, and a heat seal film ("ADMER" (registered trademark) QE-060, manufactured by Mitsui Chemicals, Inc.) of the same shape as the outer periphery of the glass epoxy substrate was fixed to both sides. Next, a rectangular PE separator (made of SELGUARD) measuring 95 mm in width × 195 mm in length is fixed to one side of the glass epoxy substrate by heat sealing to produce a frame member for a single cell in which a frame-shaped glass epoxy substrate is fixed to one side of the separator.
The resin current collector prepared in the above section (i) is cut into a rectangle with an outer shape of 105 mm in width × 205 mm in length, and the active material prepared in the above subsection (ii) is applied with a squeegee onto the surface of the resin current collector on which the metal layer is formed, in a rectangular shape of 66 mm in width × 166 mm in length, leaving the outer periphery.
A positive-electrode active material layer is formed on the surface of the metal layer of the resin current collector for positive electrode and a negative-electrode active material layer is formed on the surface of the metal layer of the resin current collector for negative electrode, prepared in the above subsection (i). After the NMP which is an adjustment solvent is dried and a coating film is formed, the resulting coating film is subjected to a press treatment to form an active material layer having a thickness of 30 μm.

The positive-electrode active material layer is placed inside the framed glass epoxy substrate of the frame member for the single cells in an orientation in which the active material layer is in contact with the separator, and the negative-electrode active material layer is placed in an orientation in which the active material layers face each other with the separator interpoased therebetween.

An electrolytic solution is previously injected into the inside of each frame-shaped glass epoxy substrate of the frame member for single cell before the positive-electrode active material layer is accommodated therein. The electrolytic solution used is a 1 mol/L solution of lithium hexafluorophosphate (LiPF$_6$) using an equal volume mixture of ethylene carbonate and diethylene carbonate (EC:DEC=1:1 (volume ratio)).

A single cell is prepared by heat-sealing the overlapping portions of the resin current collector on positive-electrode side/glass epoxy substrate/resin current collector on negative-electrode side, and then eight of the single cells are laminated in an orientation in which the resin current collector on positive-electrode side and the resin current collector on negative-electrode side are in contact with each other to prepare a laminated cell, and the laminated cell is accommodated and sealed in a laminate container to prepare a cell for battery evaluation.

(iv) Battery characterization (external stress resistance)

Ten cells for battery characterization were prepared according to the above (i), (ii), and (iii). For a bending test, each cell for battery characterization is bent along a cylindrical surface with the following curvature, and then the presence of a short circuit is checked as an electrical characteristic of the cell for battery characterization. A bending test was carried out at R250 (mm), R90 (mm), R70 (mm), and R30 (mm), in this order, and the external stress resistance was evaluated as a battery characteristic using a resin current collector based on the curvature at which a short circuit occurred. Ten cells for battery characterization were used for evaluation, and the curvature at which the highest number of short circuits occurred is used to evaluate the external stress resistance as follows.

AA: No short-circuit occurs after bending test using R30.
A: Short circuit occurs after bending test using R30.
B: Short circuit occurs after bending test using R70.
C: Short circuit occurs after bending test using R90.
D: Short circuit occurs after bending test using R250.

As for the external stress resistance, AA to C are good, and AA is the best among them.

E. Evaluation of laminated secondary battery

(i) Preparation of monopolar resin current collector

In the same manner as in subsection (i) of section D. above, a monopolar resin current collector for negative electrode having a copper layer on both sides of the polyester film of the present invention and a monopolar resin current collector for positive electrode having an aluminum layer are obtained.

(ii) Preparation of laminated secondary battery

The active material layers shown below are coated on both sides of the monopolar current collector obtained in (i) above, dried, and roll-pressed to obtain a positive electrode composed of a resin current collector having a specified thickness and a negative electrode composed of a resin current collector.

The positive electrode composed of resin current collector, a separator, the negative electrode composed of resin current collector and a separator are laminated in this order. Here, the end part of the laminated resin current collector is bonded to the electrode lead tab every 30 collectors using an ultrasonic welding method. After bonding, the resistance between the electrode tab and each bonded current collector is measured. When the resistance exceeds 60 mΩ, the number of collectors is reduced and welding is performed again.

(Member for positive electrode)

·Active material: LiFePO$_4$ (LFP) 85% by mass
·Conductive assistant: Acetylene black 5% by mass
·Binder: Polyvinylidene fluoride (PVDF) 10% by mass
·Slurry viscosity adjusting solvent: N-methyl-2-pyrrolidone (NMP) appropriate amount

The above components are mixed to prepare a positive-electrode active material slurry.

(Member for negative electrode)

·Active material: Graphite 85% by mass
·Conductive assistant: Acetylene black 5% by mass
·Binder: Carboxymethyl cellulose (CMC) 5% by mass/styrene-butadiene rubber (SBR) 5% by mass
·Slurry viscosity adjusting solvent: water appropriate amount The above components are mixed to prepare a positive-electrode active material slurry.

(Separator)

10 μm Porous polyethylene film is used.
The laminate is placed in an aluminum pouch bag. In this case, the electrode leads should protrude outside the aluminum pouch bag. As the electrolytic solution, a positive electrode composed of a resin current collector, a separator, a negative electrode composed of a resin current collector and a separator are laminated in this order. The end part of the laminated resin current collector is joined to the electrode lead tab using an ultrasonic welding method.
The aluminum pouch bag is filled with the electrolytic solution described below and the pouch bag is sealed to obtain a laminated secondary battery.

(Electrolytic solution)

Electrolyte: Lithium hexafluorophosphate (LiPF$_6$) 1 mol/L

Solvent: Mixed solution of ethylene carbonate (EC)/ethylene methylene carbonate (EMC)/dimethylene carbonate (DMC).
Mixing ratio: EC : EMC : DMC = 30:40:30 (volume ratio)

(iii) Pressure durability test

Five laminated battery cells are prepared in accordance with the preceding subsection (ii) and subjected to a pressure durability test. First, each multilayer battery cell is placed on a metal plate and a metal round bar with a diameter of 15.8 mm is pressed from above at a pressure of 13kN. The voltage of the battery is measured when the battery cell is pressed 1 cm at a speed of 3 m/min, and the reduction rate relative to the initial voltage is calculated. An average value of the voltage reduction rates of the five laminated secondary batteries is regarded as the voltage reduction rate of the laminated secondary battery sample, and evaluation is performed as follows.

A: The voltage reduction rate after the pressure durability test is 10% or less.
B: The voltage reduction rate after the pressure durability test is more than 10% and 25% or less.
C: The voltage reduction rate after the pressure durability test is more than 25% and 50% or less.
D: The voltage reduction rate after the pressure durability test is more than 50%, or the battery cell ignites during the test.

As for evaluation in the pressure durability test, A to C are good, and A is the best among them.

(iv) Evaluation of long-term storage

In accordance with the preceding subsection (ii), five laminated secondary batteries are left in an environment of 35°C and 50% RH for 100 hours. Thereafter, the capacity during charging is determined, and evaluated based on the retention of charging capacity before and after long-term storage as follows. An average value of the retention of charging capacity of the five laminated secondary batteries is regarded as the retention of charging capacity of the laminated secondary battery sample, and evaluation is performed as follows.

A: Retention of charging capacity after long-term storage is 98% or more.
B: Retention of charging capacity after long-term storage is 95% or more and less than 98%.
C: Retention of charging capacity after long-term storage is 90% or more and less than 95%.
D: Retention of charging capacity after long-term storage is less than 90%.

As for evaluation of long-term storage A to C are good, and A is the best among them.

(v) Electrode tab bondability

In accordance with the preceding subsection (ii), for joints with electrode tabs of five laminated secondary batteries, resistance values between the electrode tabs and 30 current collectors bonded to the electrode tabs are measured. The current collector closest to the electrode tab is taken as the first current collector, and the number of current collectors whose resistance value exceeds 60 m$\Omega$ for the first time is counted. The same evaluation is performed on the five laminated secondary batteries, and the average value is regarded as the electrode tab bondability of the laminated secondary battery sample.

A. Among 30 current collectors, resistance values of 25 or more current collectors satisfy 60 m$\Omega$ or less.
B. Among 30 current collectors, resistance values of 20 or more and 24 or less current collectors satisfy 60 m$\Omega$ or less.
C. Among 30 current collectors, resistance values of 15 or more and 19 or less current collectors satisfy 60 m$\Omega$ or less.
D. Among 30 current collectors, resistance values of 14 or less current collectors satisfy 60 m$\Omega$ or less.

Examples

The present invention will be described below with reference to examples, but the present invention is not necessarily limited to these examples.

[Production of polyester-1]

To 1 mole of dimethyl terephthalate (DMT), 1.9 moles of ethylene glycol was added, and to 100 parts by mass of DMT, 0.05 parts by mass of magnesium acetate tetrahydrate and 0.015 parts by mass of phosphoric acid were added for heat transesterification. Subsequently, 0.025 parts by mass of antimony trioxide was added, and the mixture was heated to raise the temperature and polycondensed under a highly reduced pressure to obtain pellets of polyester-1 substantially free of particles. The polyester-1 had a glass transition temperature of 81°C, a melting point of 255°C, and an intrinsic viscosity of 0.70 dl/g.

[Production of polyester-2]

To 1 mole of DMT, 1.9 moles of ethylene glycol was added, and to 100 parts by mass of DMT, 0.05 parts by mass of magnesium acetate tetrahydrate and 0.015 parts by mass of phosphoric acid were added for heat transesterification. 0.01% by mass of silica having an average particle size of 1 $\mu$m was included. Subsequently, 0.025 parts by mass of antimony trioxide was added, and the mixture was heated to raise the temperature and polycondensed under a highly reduced pressure to obtain pellets of polyester-2, which contained silica particles. The polyester-2 had a glass transition temperature of 81°C, a melting point of 255°C, and an intrinsic viscosity of 0.70 dl/g.

(Method of producing master pellet of carbon material)

[Production of Carbon-1]

The polyester-1 and Ketjen black were kneaded and extruded using a twin-screw kneader set to raise the temperature stepwise from 230 to 270°C to obtain Carbon-1 that is a master pellet containing 5% by mass of Ketjen black.

[Production of Carbon-2]

The Polyester-1 and carbon nanotubes were kneaded and extruded using a twin-screw kneader set to raise the temperature stepwise from 230 to 270°C to obtain Carbon-2 that is a master pellet containing 5% by mass of carbon nanotubes.

[Production of Carbon-3]

The polyester-1 and acetylene black were kneaded and extruded using a twin-screw kneader set to raise the temperature stepwise from 230 to 270°C to obtain Carbon-3 that is a master pellet containing 10% by mass of acetylene black.

[Production of Carbon-4]

The polyester-1 and furnace black were kneaded and extruded using a twin-screw kneader set to raise the temperature stepwise from 230 to 270°C to obtain Carbon-4 that is a master pellet containing 20% by mass of furnace black.

[Production of Carbon-5]

The polyester-1 and furnace black and silica particles having an average particle diameter of 1 $\mu$m were kneaded and extruded using a twin-screw kneader set to raise the temperature stepwise from 230 to 270°C to obtain Carbon-5 that is a master pellet containing 20% by mass of furnace black and 0.01% by mass of silica particles having an average particle diameter of 1 $\mu$m.

(Example 1)

After drying Polyester-1 at 180°C and Carbon-1 at 150°C under reduced pressure for 2.5 hours, each resin was mixed such that the content concentration was as shown in the table, and fed to the extruder. After melt-extrusion and filtration through a filter, the film was wound through a T-die onto a cooled casting roll maintained at 50°C using the electrostatic application casting method, cooled, and solidified to obtain an unstretched film. The unstretched film was first guided to a group of stretching rolls heated to 60°C to 120°C in the longitudinal direction, where it was stretched 3.0 times by a stretching operation according to the film formation conditions shown in tables. The uniaxially stretched film was then guided to a tenter and preheated to 90°C, then stretched 3.0 times in the width direction at a temperature of 100°C to 130°C, and then heat-treated at 230°C under a constant length to apply 4% of relaxation treatment of to obtain a biaxially oriented polyester film having a thickness of 5 $\mu$m. The evaluation results are as shown in the table.

A layer M was provided on the polyester film of the present invention according to the vacuum deposition processing method described in the above [Method of evaluating application characteristics] such that the metal species and thickness of the metal layer were as shown in the table, and a resin current collector for positive electrode and a resin current collector for negative electrode were produced. The evaluation results are as shown in the table.

To evaluate the resin current collector, a battery evaluation cell using the positive electrode resin current collector and the negative electrode resin current collector was produced according to the method described in the above [Method for evaluating application characteristics], and the battery characteristics were evaluated. As shown in the table, the polyester film had excellent resistance to external stress.

(Example 2)

A polyester film was obtained in the same manner as in Example 1 except that the amount of Ketjen black added was reduced compared to that in Example 1 as shown in the table, and each evaluation was performed.

The increase in volume resistivity compared to Example 1 resulted in a decrease in the elongation at break in the longitudinal direction after copper deposition. The external stress resistance of the resin current collector was evaluated to be worse than that in Example 1, but was still within the practical range.

(Example 3)

Polyester film was obtained in the same manner as in Example 1 except that carbon-2 was used as the master pellet and the carbon agent was carbon nanotubes (CNTs) and the amount added was increased as described in the table, and each evaluation was performed.

(Example 4)

A polyester film was obtained in the same manner as in Example 1 except that the film thickness was made thinner than that in Example 1 as shown in the table, and each evaluation was performed.

Since the film thickness was made thinner than that in Example 1, elongation at break in the longitudinal direction after copper deposition was reduced and the external stress resistance of the resin current collector was worse than that in Example 1, but both were still within the practical range.

(Example 5)

A polyester film was obtained in the same manner as in Example 3 except that the configuration of the polyester film was a three-layer configuration including the layer P2 using Polyester-1 as a raw material as shown in the table, and each evaluation was performed.

Since the three-layer configuration including the P2 layer that does not contain carbon material was adopted, the volume resistivity increased compared to Example 3. Elongation at break in the longitudinal direction after copper deposition was increased, and the external stress resistance of the resin current collector was improved compared to Example 3.

(Examples 6 to 8, and 11)

In Exampled 6 and 7, a polyester film having a thickness of 4.5 $\mu$m was obtained in the same manner as in Example 1 except that Carbon-4 was used as the master pellet and furnace black as the conductive particle was changed as shown in the table and the film formation conditions were changed as shown in the table, and each evaluation was performed. In Examples 8 and 11, a polyester film having a thickness of 4.5 $\mu$m was obtained in the same manner as in Example 1 except that Ketjen black was changed as shown in the table and the film formation conditions were changed as shown in the table, and each evaluation was performed.

(Example 9)

A polyester film having a thickness of 4.5 $\mu$m was obtained in the same manner as in Example 1, except that Polyester-2 and Carbon-5 were used as raw materials containing silica particles having an average particle diameter of 1 $\mu$m as lubricant particles and the film formation conditions were changed as shown in the table, and each evaluation was performed.

When silica particles are included, voids derived from the silica particles are generated in the film that were heated during the vapor deposition step, resulting in degradation in mechanical properties. The external stress resistance was reduced compared to Example 1, but was still within the practical range.

(Example 10)

A resin current collector was obtained in the same manner as in Example 8, except that a metal layer having a thickness of 3 $\mu$m as shown in the table was provided on a polyester film having a thickness of 4.5 $\mu$m, and each evaluation was performed. The increase in the thickness of the metal layer increased the amount of heat that to which the film is exposed during the vapor deposition step, resulting in degraded mechanical properties. The external stress resistance was reduced compared to Example 1, but was still within the practical range.

(Comparative Example 1)

A polyester film was obtained in the same manner as in Example 1, except that the constituents of the polyester film were as shown in the table and no carbon material was contained, and each evaluation was performed.

The polyester film did not contain carbon materials, and thus had increased volume resistivity compared to Example 1, and had reduced elongation at break in the longitudinal direction after copper deposition, and was thus significantly inferior in external stress resistance of the resin current collector compared to Example 1.

(Comparative Example 2)

Polyester film was obtained in the same manner as in Example 1 except that carbon-3 was used as the raw material and the carbon agent was acetylene black and the amount added was considerably increased relative to that in Example 1, as shown in the table, and each evaluation was performed.

[Laminated secondary battery]

(Example 12)

A laminated secondary battery was produced by laminating a plurality of current collectors in accordance with the above section "D. Evaluation of laminated secondary battery", using as a current collector the laminated polyester film with a metal layer obtained in Example 6. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.

(Example 13)

A laminated secondary battery was produced by laminating a plurality of current collectors in accordance with the above section "D. Evaluation of laminated secondary battery", using as a current collector the laminated polyester film with a metal layer obtained in Example 2. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.
The laminated polyester film in Example 2 was evaluated as inferior in pressure resistance due to its mechanical properties inferior to those of Example 6, and evaluated as slightly poor in electrode-tab bondability due to high volume resistivity of the polyester film, but both are within the practical range.

(Example 14)

A laminated secondary battery was produced by laminating a plurality of current collectors in accordance with the above section "D. Evaluation of laminated secondary battery", using as a current collector the laminated polyester film with a metal layer obtained in Example 7. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.
The mechanical properties of the laminated polyester film in Example 7 were comparable to those of Example 6. However, due to the increased thickness ratio at the end part, stress was concentrated at the end part of the laminate in the pressure durability test, and therefore the pressure durability was evaluated as inferior to Example 12, but was still within the practical range. In addition, since the amount of furnace black leaked into the electrolytic solution in the secondary battery was larger than that in Example 12, the long-term storage evaluation was evaluated as inferior, but was still within the practical range.

(Example 15, 16, and 18)

In Examples 15 and 16, a laminated secondary battery was produced by laminating a plurality of current collectors in accordance with the above section "D. Evaluation of laminated secondary battery", using as a current collector the laminated polyester film with a metal layer obtained in Example 8. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.
In Example 18, a laminated secondary battery was produced by laminating a plurality of current collectors in accordance with the above section "D. Evaluation of laminated secondary battery", using as a current collector the laminated polyester film with a metal layer obtained in Example 11. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.

(Example 17)

A laminated secondary battery was produced by laminating a plurality of current collectors in accordance with the above section "D. Evaluation of laminated secondary battery", using as a current collector the laminated polyester film with a metal layer obtained in Example 9. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.
Since the mechanical properties were degraded due to the silica particles contained in the laminated polyester film in Example 9, the pressure durability was evaluated as inferior compared to Example 12, but was still within the practical range.

(Comparative Example 3)

A laminated secondary battery was produced by laminating a plurality of current collectors in accordance with the above section "D. Evaluation of laminated secondary battery", using as a current collector the laminated polyester film with a metal layer obtained in Comparative Example 1. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.

Since the mechanical properties of the laminated polyester film in Comparative Example 1 were significantly inferior, the pressure durability was evaluated as significantly inferior to Example 12. In addition, since the volume resistivity of the polyester film in Comparative Example 1 was significantly inferior, the secondary battery was evaluated as significantly inferior to Example 12 in the electrode tab bondability.

(Comparative Example 4)

A laminated secondary battery was produced by laminating a plurality of current collectors in accordance with the above section "D. Evaluation of laminated secondary battery", using as a current collector the laminated polyester film with a metal layer obtained in Comparative Example 2. The configuration of the laminated secondary battery is as shown in the table, and the evaluations (Evaluation of pressure durability, Evaluation of long-term storage, Evaluation of electrode tab bondability) of the obtained laminated secondary battery are as shown in the table.

Since the mechanical properties of the laminated polyester film in Comparative Example 2 were significantly inferior, the pressure durability was evaluated as significantly inferior to Example 12. Since a large amount of acetylene black leaked in the electrolytic solution, the secondary battery is evaluated as significantly inferior to Example 12 in the long-term storage.

(Comparative Example 5)

A laminated secondary battery is produced by laminating a plurality of current collectors in accordance with the above section "D. Evaluation of laminated secondary battery", using as a current collector for positive electrode an aluminum foil having a thickness of 10 μm, and as a current collector for negative electrode a copper foil having a thickness of 10 μm.

Here, the elongation at break and breaking strength of the aluminum foil were 2% and 110 MPa, respectively, as measured according to the above "B. Evaluation of mechanical properties of polyester film with surface metal layer provided thereon". The elongation at break and breaking strength of the copper foil were 10% and 300 MPa, respectively.

The configuration of the laminated secondary battery is as shown in the table, and the evaluations (Evaluation of pressure durability, Evaluation of long-term storage, Evaluation of electrode tab bondability) of the obtained laminated secondary battery are as shown in the table.

The secondary battery is evaluated as significantly inferior compared to Example 12.

[Table 1]

[Table 1]

| | | Layer P1 (Resin layer containing 0.1 mass% or more and less than 5.0 mass% of carbon material) | | | Layer P2 (Resin layer with carbon material content lower than that in layer P1) | | |
|---|---|---|---|---|---|---|---|
| | | Main component resin | Carbon species | Carbon content (mass%) | Main component resin | Carbon species | Carbon content (mass%) |
| | Example 1 | Polyester-1 | Ketjen black | 1.0 | - | - | - |
| | Example 2 | Polyester-1 | Ketjen black | 0.3 | - | - | - |
| | Example 3 | Polyester-1 | Carbon nanotube | 3.0 | - | - | - |
| | Example 4 | Polyester-1 | Ketjen black | 1.0 | - | - | - |
| | Example 5 | Polyester-1 | Carbon nanotube | 3.0 | Polyester-1 | - | 0.0 |

(continued)

| | Layer P1 (Resin layer containing 0.1 mass% or more and less than 5.0 mass% of carbon material) | | | Layer P2 (Resin layer with carbon material content lower than that in layer P1) | | |
|---|---|---|---|---|---|---|
| | Main component resin | Carbon species | Carbon content (mass%) | Main component resin | Carbon species | Carbon content (mass%) |
| Example 6 | Polyester-1 | Furnace black | 4.0 | - | - | - |
| Example 7 | Polyester-1 | Furnace black | 4.9 | - | - | - |
| Example 8 | Polyester-1 | Ketjen black | 1.2 | - | - | - |
| Example 9 | Polyester-2 | Ketjen black | 1.2 | - | - | - |
| Example 10 | Polyester-1 | Ketjen black | 1.2 | - | - | - |
| Example 11 | Polyester-1 | Ketjen black | 1.2 | - | - | - |
| Comparative Example 1 | Polyester-1 | - | 0.0 | - | - | - |
| Comparative Example 2 | Polyester-1 | Acetylene black | 10.0 | - | - | - |

[Table 2]

[Table 2]

| | | Film formation conditions | | | | | | Film characteristics | | |
|---|---|---|---|---|---|---|---|---|---|---|
| | Biaxially stretching | Stretching in longitudinal direction | Stretching in width direction | Lamination configuration | Film thickness | | | Intrinsic viscosity $IV_F$ (dl/g) | Volume resistivity ($\Omega \cdot$cm) | Relative permittivity (-) |
| | | Stretching ratio (times) | Stretching ratio (times) | | Entire layer T ($\mu$m) | Layer P1 $T_{P1}$ ($\mu$m) | Layer P2 TP2 ($\mu$m) | | | |
| Example 1 | Sequential | 3.0 | 3.0 | Monolayer | 5 | 5 | - | 0.65 | $1.0 \times 10^{15}$ | 5.0 |
| Example 2 | Sequential | 3.0 | 3.0 | Monolayer | 5 | 5 | - | 0.65 | $5.0 \times 10^{16}$ | 3.5 |
| Example 3 | Sequential | 3.0 | 3.0 | Monolayer | 5 | 5 | - | 0.65 | $2.0 \times 10^{8}$ | 25 |
| Example 4 | Sequential | 3.0 | 3.0 | Monolayer | 3 | 3 | - | 0.65 | $1.0 \times 10^{15}$ | 4.6 |
| Example 5 | Sequential | 4.0 | 3.8 | Three-layer (Layer P2 /Layer P1 /Layer P2) | 5 | 3 | 1 | 0.65 | $1.0 \times 10^{10}$ | 20 |
| Example 6 | Sequential | 4.0 | 3.8 | Monolayer | 4.5 | 4.5 | - | 0.65 | $4.5 \times 10^{15}$ | 4.6 |
| Example 7 | Sequential | 4.0 | 3.8 | Monolayer | 4.5 | 4.5 | - | 0.65 | $1.1 \times 10^{15}$ | 4.6 |
| Example 8 | Sequential | 4.0 | 3.8 | Monolayer | 4.5 | 4.5 | - | 0.65 | $2.5 \times 10^{15}$ | 6.5 |
| Example 9 | Sequential | 4.0 | 3.8 | Monolayer | 4.5 | 4.5 | - | 0.65 | $2.5 \times 10^{15}$ | 6.5 |
| Example 10 | Sequential | 4.0 | 3.8 | Monolayer | 4.5 | 4.5 | - | 0.65 | $2.5 \times 10^{15}$ | 6.5 |
| Example 11 | Sequential | 4.5 | 4.5 | Monolayer | 4.5 | 4.5 | - | 0.65 | $2.5 \times 10^{15}$ | 6.5 |
| Comparative Example 1 | Sequential | 3.0 | 3.0 | Monolayer | 5 | 5 | - | 0.65 | $1.0 \times 10^{17}$ | 2.9 |
| Comparative Example 2 | Sequential | 3.0 | 3.0 | Monolayer | 5 | 5 | - | 0.65 | $1.0 \times 10^{6}$ | 35 |

[Table 3]

[Table 3]

[Table 3]

| | Film configuration for resin current collector | | | | | | | | |
|---|---|---|---|---|---|---|---|---|---|
| | Method of laminating layer (layer M) composed of metal and/or metal compound | Lamination configuration | Resin current collector for positive electrode | | Resin current collector for negative electrode | | Thickness ratio of end part | | |
| | | | Metal species | Thickness $T_M$ ($\mu m$) | Metal species | Thickness $T_M$ ($\mu m$) | Thickness of end part | Thickness at 20 mm inward from end part | Thickness ratio |
| | | | | | | | D1($\mu m$) | D2($\mu m$) | D1/D2 |
| Example 1 | Vacuum vapor deposition | Layer M/Layer P1/Layer M | Aluminum | 1 | Copper | 1 | 6.7 | 7.0 | 0.96 |
| Example 2 | Vacuum vapor deposition | Layer M/Layer P1/Layer M | Aluminum | 1 | Copper | 1 | 6.7 | 7.0 | 0.96 |
| Example 3 | Vacuum vapor deposition | Layer M/Layer P1/Layer M | Aluminum | 1 | Copper | 1 | 6.7 | 7.0 | 0.96 |
| Example 4 | Vacuum vapor deposition | Layer M/Layer P1/Layer M | Aluminum | 1 | Copper | 1 | 4.8 | 5.0 | 0.96 |
| Example 5 | Vacuum vapor deposition | Layer M/Layer P2/Layer P1 /Layer P2/Layer M | Aluminum | 1 | Copper | 1 | 6.2 | 6.5 | 0.95 |
| Example 6 | Vacuum vapor deposition | Layer M/Layer P1/Layer M | Aluminum | 1 | Copper | 1 | 6.8 | 6.5 | 1.05 |
| Example 7 | Vacuum vapor deposition | Layer M/Layer P1/Layer M | Aluminum | 1 | Copper | 1 | 7.4 | 6.5 | 1.14 |

EP 4 675 712 A1

34

(continued)

| | Method of laminating layer (layer M) composed of metal and/or metal compound | Lamination configuration | Resin current collector for positive electrode | | Resin current collector for negative electrode | | Thickness ratio of end part | | |
|---|---|---|---|---|---|---|---|---|---|
| | | | Metal species | Thickness $T_M$ ($\mu$m) | Metal species | Thickness $T_M$ ($\mu$m) | Thickness of end part D1($\mu$m) | Thickness at 20 mm inward from end part D2($\mu$m) | Thickness ratio D1/D2 |
| Example 8 | Vacuum vapor deposition | Layer M/Layer P1/Layer M | Aluminum | 1 | Copper | 1 | 6.2 | 6.5 | 0.95 |
| Example 9 | Vacuum vapor deposition | Layer M/Layer P1/Layer M | Aluminum | 1 | Copper | 1 | 6.2 | 6.5 | 0.95 |
| Example 10 | Vacuum vapor deposition | Layer M/Layer P1/Layer M | Aluminum | 3 | Copper | 3 | 10.0 | 10.5 | 0.95 |
| Example 11 | Vacuum vapor deposition | Layer M/Layer P1/Layer M | Aluminum | 1 | Copper | 1 | 5.2 | 5.5 | 0.95 |
| Comparative Example 1 | Vacuum vapor deposition | Layer M/Layer P1/Layer M | Aluminum | 1 | Copper | 1 | 7.0 | 7.0 | 1.00 |
| Comparative Example 2 | Vacuum vapor deposition | Layer M/Layer P1/Layer M | Aluminum | 1 | Copper | 1 | 8.8 | 7.0 | 1.26 |

Film configuration for resin current collector

[Table 4]

[Table 4]

[Table 4]

| | Current collector characteristics | | | | | | | | | | |
| | Mechanical properties of resin current collector for positive electrode | | | | Mechanical properties of resin current collector for negative electrode | | | | Arithmetic average height Sa of metal layer (nm) | | Silicon element content (mass ppm) |
| | Longitudinal direction | | Width direction | | Longitudinal direction | | Width direction | | | | |
| | Elongation at break (%) | Breaking strength (MPa) | Elongation at break (%) | Breaking strength (MPa) | Elongation at break (%) | Breaking strength (MPa) | Elongation at break (%) | Breaking strength (MPa) | Positive electrode | Negative electrode | |
|---|---|---|---|---|---|---|---|---|---|---|---|
| Example 1 | 55 | 185 | 50 | 190 | 55 | 185 | 50 | 190 | 35 | 35 | <10 |
| Example 2 | 40 | 200 | 40 | 200 | 40 | 200 | 40 | 200 | 35 | 35 | <10 |
| Example 3 | 30 | 205 | 30 | 205 | 30 | 205 | 30 | 205 | 35 | 35 | <10 |
| Example 4 | 25 | 210 | 25 | 210 | 25 | 210 | 25 | 210 | 35 | 35 | <10 |
| Example 5 | 40 | 190 | 45 | 190 | 40 | 190 | 45 | 190 | 35 | 35 | <10 |
| Example 6 | 75 | 250 | 70 | 230 | 75 | 250 | 70 | 230 | 35 | 35 | <10 |
| Example 7 | 80 | 250 | 75 | 230 | 80 | 250 | 75 | 230 | 35 | 35 | <10 |
| Example 8 | 85 | 270 | 80 | 270 | 85 | 270 | 80 | 270 | 35 | 35 | <10 |
| Example 9 | 40 | 160 | 40 | 165 | 40 | 160 | 40 | 165 | 35 | 35 | 100 |
| Example 10 | 50 | 195 | 50 | 185 | 50 | 195 | 50 | 185 | 50 | 50 | <10 |
| Example 11 | 70 | 270 | 70 | 310 | 70 | 280 | 70 | 310 | 35 | 35 | <10 |
| Comparative Example 1 | 15 | 130 | 15 | 130 | 15 | 130 | 15 | 130 | 35 | 35 | <10 |
| Comparative Example 2 | 10 | 100 | 10 | 100 | 10 | 100 | 10 | 100 | 35 | 35 | <10 |

[Table 5]

|  | Evaluation of film formability | | Evaluation of resin current collector |
| --- | --- | --- | --- |
|  | Extrusion stability | Stretchability | External stress resistance |
| Example 1 | A | A | A |
| Example 2 | A | A | B |
| Example 3 | C | A | C |
| Example 4 | A | B | C |
| Example 5 | B | A | B |
| Example 6 | C | A | AA |
| Example 7 | B | A | AA |
| Example 8 | A | A | AA |
| Example 9 | A | A | C |
| Example 10 | A | A | B |
| Example 11 | A | A | A |
| Comparative Example 1 | A | A | D |
| Comparative Example 2 | D | D | D |

[Table 6]

[Table 6]

|  |  | Configuration of laminated secondary battery | | | | | |
| --- | --- | --- | --- | --- | --- | --- | --- |
|  |  | | Active agent layer | | | | |
|  | Current collector | Thickness of current collector (μm) | Thickness of positive-electrode active material layer (μm) | Thickness of separator (μm) | Thickness of negative-electrode active material layer (μm) | Total thickness of active agent layer (μm) | Thickness of current collector/Thickness of active agent layer |
| Example 12 | Current collector described in Example 6 | 6.5 | 100 | 10 | 120 | 230 | 0.028 |
| Example 13 | Current collector described in Example 2 | 7.0 | 100 | 10 | 120 | 230 | 0.030 |
| Example 14 | Current collector described in Example 7 | 6.5 | 100 | 10 | 120 | 230 | 0.028 |
| Example 15 | Current collector described in Example 8 | 6.5 | 100 | 10 | 120 | 230 | 0.028 |

(continued)

| | Current collector | Configuration of laminated secondary battery | | | | | |
|---|---|---|---|---|---|---|---|
| | | Thickness of current collector (μm) | Active agent layer | | | | Thickness of current collector/Thickness of active agent layer |
| | | | Thickness of positive-electrode active material layer (μm) | Thickness of separator (μm) | Thickness of negative-electrode active material layer (μm) | Total thickness of active agent layer (μm) | |
| Example 16 | Current collector described in Example 8 | 6.5 | 80 | 10 | 96 | 186 | 0.030 |
| Example 17 | Current collector described in Example 9 | 6.5 | 100 | 10 | 120 | 230 | 0.028 |
| Example 18 | Current collector described in Example 11 | 4.5 | 120 | 10 | 150 | 280 | 0.016 |
| Comparative Example 3 | Current collector described in Comparative Example 1 | 7.0 | 100 | 10 | 120 | 230 | 0.030 |
| Comparative Example 4 | Current collector described in Comparative Example 2 | 7.0 | 100 | 10 | 120 | 230 | 0.030 |
| Comparative Example 5 | Aluminum foil, copper foil | 10 | 100 | 10 | 120 | 230 | 0.043 |

[Table 7]

[Table 7]

| | Configuration of laminated secondary battery | | | | |
|---|---|---|---|---|---|
| | Number of lamination | Shape of depression in electrode tab joint | | Electrolytic solution | |
| | | Interval of depressions (mm) | Depth of depression (mm) | Furnace black Ketjen black concentration (mass ppm) | Acetylene black concentration (mass ppm) |
| Example 12 | 60 | 0.5 | 0.5 | 5 | <0.1 |
| Example 13 | 60 | 0.5 | 0.5 | 1 | <0.1 |
| Example 14 | 60 | 0.5 | 0.5 | 30 | <0.1 |

(continued)

| | Configuration of laminated secondary battery | | | | |
| --- | --- | --- | --- | --- | --- |
| | | Shape of depression in electrode tab joint | | Electrolytic solution | |
| | Number of lamination | Interval of depressions (mm) | Depth of depression (mm) | Furnace black Ketjen black concentration (mass ppm) | Acetylene black concentration (mass ppm) |
| Example 15 | 60 | 0.5 | 0.5 | 1 | <0.1 |
| Example 16 | 75 | 0.5 | 0.5 | 1 | <0.1 |
| Example 17 | 60 | 0.5 | 0.5 | 1 | <0.1 |
| Example 18 | 50 | 0.5 | 0.5 | 1 | <0.1 |
| Comparative Example 3 | 60 | 0.5 | 0.5 | <0.1 | <0.1 |
| Comparative Example 4 | 60 | 0.5 | 0.5 | <0.1 | 300 |
| Comparative Example 5 | 40 | 0.5 | 0.5 | <0.1 | <0.1 |

[Table 8]

| | Laminated battery characteristics | | |
| --- | --- | --- | --- |
| | Evaluation of pressure durability | Evaluation of long-term storage | Evaluation of electrode tab bondability |
| Example 12 | A | A | A |
| Example 13 | B | A | B |
| Example 14 | B | C | A |
| Example 15 | A | A | A |
| Example 16 | A | A | A |
| Example 17 | C | A | A |
| Example 18 | A | A | A |
| Comparative Example 3 | D | A | D |
| Comparative Example 4 | D | D | A |
| Comparative Example 5 | D | A | A |

**Claims**

1. A secondary battery comprising a current collector having a layer (hereinafter referred to as layer M) composed of a metal and/or metal-based compound and having a thickness of $0.2\ \mu m$ or more and $3.0\ \mu m$ or less on surfaces on both sides of a polyester film that satisfies the following (1) and (2):

   (1) a thickness of the polyester film is $1\ \mu m$ or more and $30\ \mu m$ or less; and
   (2) the polyester film has a resin layer containing 0.1% by mass or more and less than 5.0% by mass of conductive particles.

2. The secondary battery according to claim 1, wherein 100% by mass of the conductive particles contain at least one selected from furnace black, Ketjen black, carbon nanotubes, and acetylene black in a total amount of 80% by mass or more and 100% by mass or less.

3. The secondary battery according to claim 1 or 2, comprising a current collector in which an active material layer is directly laminated on a surface of the layer M.

4. The secondary battery according to claim 1 or 2, wherein the layer M comprises the current collector containing aluminum element or copper element.

5. The secondary battery according to claim 1 or 2, comprising the current collector having a thickness of 4 $\mu$m or more and 7 $\mu$m or less.

6. The secondary battery according to claim 1 or 2, comprising a configuration in which at least 45 or more and 80 or less layers of the current collectors are laminated with a lamination configuration interposed therebetween, the lamination configuration (hereinafter referred to as an active agent layer) including a positive-electrode active material layer and a negative-electrode active material layer.

7. The secondary battery according to claim 1 or 2, comprising a configuration in which at least 45 or more and 80 or less layers of the current collectors are laminated, the laminated current collectors having a joint with one electrode tab, the joint having depressions with a depth of 0.1 mm or more and 1.0 mm or less at intervals of 0.3 mm or more and 0.8 mm or less.

8. The secondary battery according to claim 6, wherein the thickness of the current collector is 0.01 times or more and 0.04 times or less the thickness of the active agent layer.

9. The secondary battery according to claim 1 or 2, wherein D1/D2 is 0.9 or more and 1.2 or less, where D1 ($\mu$m) is a thickness of the end part of the current collector, and D2 ($\mu$m) is a thickness of the current collector at a position 20 mm inward from the end part of the current collector.

10. The secondary battery according to claim 1 or 2, wherein the layer M contains aluminum element, and a current collector is mounted in which a positive-electrode active material layer having a thickness of 90 $\mu$m or more and 120 $\mu$m or less is laminated on a surface of the layer M containing aluminum element.

11. The secondary battery according to claim 1 or 2, wherein the layer M contains copper element, and a current collector is mounted in which a negative-electrode active material layer having a thickness of 80 $\mu$m or more and 170 $\mu$m or less is laminated on a surface of the layer M containing copper element.

12. The secondary battery according to claim 1 or 2, comprising an electrolytic solution containing furnace black and Ketjen black in a total amount of 0.001 mass ppm or more and 100 mass ppm or less.

13. A polyester film, satisfying the following (3) and (4), and used to directly deposit a layer (hereinafter referred to as layer M) that is composed of a metal and/or metal-based compound and has a thickness of 0.2 $\mu$m or more and 3.0 $\mu$m or less:

   (3) a volume resistivity at 23°C and 65 %RH is $1.0 \times 10^8$ $\Omega$cm or more and $9.0 \times 10^{16}$ $\Omega$cm or less; and
   (4) a thickness of the polyester film is 1 $\mu$m or more and 30 $\mu$m or less.

14. The polyester film according to claim 13, wherein the layer M comprises aluminum element or copper element.

15. The polyester film according to claim 13 or 14, comprising a resin layer (layer P1) containing 0.1% by mass or more and less than 5.0% by mass of the carbon material.

16. The polyester film according to claim 15, wherein 100% by mass of the carbon material contains at least one selected from furnace black, Ketjen black, carbon nanotubes, and acetylene black in a total amount of 80% by mass or more and 100% by mass or less.

17. The polyester film according to claim 15, wherein a polyester resin layer (layer P2) with a carbon material content lower than that in the layer P1 is provided on at least one side of the layer P1, and the following relation is satisfied:

$$M_{P1} - M_{P2} \geq 0.1$$

where $M_{P1}$ (% by mass) is a carbon material content in the layer P1, and $M_{P2}$ (% by mass) is a carbon material content in the layer P2.

18. The polyester film according to claim 13 or 14, wherein the relative permittivity determined using a molecular orientation analyzer is 3.5 or more and 7.0 or less.

19. A laminated polyester film comprising a layer (hereinafter referred to as layer M) that is composed of a metal and/or metal-based compound, has a thickness of 0.2 μm or more and 3.0 μm or less, and is directly laminated on surfaces on both sides of a polyester film that satisfies the following (5) and (6):

   (5) a volume resistivity at 23°C and 65 %RH is $1.0 \times 10^8$ Ωcm or more and $9.0 \times 10^{16}$ Ωcm or less; and
   (6) a thickness of the polyester film is 1 μm or more and 30 μm or less.

20. The laminated polyester film according to claim 19, wherein elongation at break in at least one of the in-plane longitudinal direction and the in-plane width direction of the film is 50% or more and 120% or less.

21. A resin current collector comprising the polyester film according to claim 13 or the laminated polyester film according to claim 19.

22. A monopolar current collector comprising a layer (hereinafter referred to as layer M) that has a thickness of 0.2 μm or more and 3.0 μm or less and is composed of a metal and/or metal-based compound on surfaces on both sides of a polyester film, and satisfying the following (7) and (8):

   (7) a thickness of the polyester film is 1 μm or more and 30 μm or less; and
   (8) the monopolar current collector has a resin layer (layer P1') containing 0.1% by mass or more and less than 5.0% by mass of conductive particles.

23. The monopolar current collector according to claim 22, wherein 100% by mass of the conductive particles contain at least one selected from Ketjen black, carbon nanotubes, and acetylene black in a total amount of 80% by mass or more and 100% by mass or less.

24. The monopolar current collector according to claim 22 or 23, comprising a polyester film having a volume resistivity at 23°C and 65 %RH of $1.0 \times 10^8$ Ωcm or more and $9.0 \times 10^{16}$ Ωcm or less.

25. The monopolar current collector according to claim 22 or 23, wherein the layer M comprises aluminum element or copper element.

26. The monopolar current collector according to claim 22 or 23, wherein elongation at break in at least one of the in-plane longitudinal direction and the in-plane width direction of the film is 50% or more and 120% or less.

27. The monopolar current collector according to claim 22 or 23, wherein the breaking strength in at least one of the in-plane longitudinal direction and the in-plane width direction of the film is 180 MPa or more and 300 MPa or less.

28. The monopolar current collector according to claim 22 or 23, comprising a layer M in contact with the polyester film, the layer M having an arithmetic average height Sa of 15 nm or more and 60 nm or less.

29. The monopolar current collector according to claim 22, wherein the silicon element content in the polyester film is 0 mass ppm or more and 10 mass ppm or less when the monopolar current collector is analyzed using inductively coupled plasma-atomic emission spectroscopy (ICP-AES) under the following conditions:

   <Analysis conditions>

   Apparatus: ICP emission spectrophotometer (manufactured by Hitachi High-Tech Science Corporation) PS3520VDDII
   Sample preparation: The polyester film is weighed into a beaker, pressure-decomposed with sulfuric acid, followed by nitric acid, and then heated and incinerated. The ash is melted with a melting mixture of sodium carbonate and boric acid to a constant volume of 10 mL. The amount of silicon element in the solution diluted with dilute nitric acid is then measured by inductively coupled plasma-atomic emission spectrometry to determine the amount of the silicon element in the polyester film.

   (Measurement conditions)

Measurement wavelength: 251.6 nm
High frequency output: 1.2 kW
Plasma gas flow rate: 16 L/min
Auxiliary gas flow rate: 0.5 L/min
Carrier gas flow rate: 0.9 L/min
Photometry height: 12 mm.

**30.** The monopolar current collector according to claim 22, wherein the layer M comprises an active material layer on its surface.

**31.** A power storage device comprising the monopolar current collector according to claim 30.

**32.** The power storage device according to claim 31, comprising a configuration in which at least two or more layers of the current collectors are laminated with an active agent layer interposed therebetween.

**33.** An electric vehicle comprising the secondary battery according to claim 1.

**34.** An electric flying object comprising the secondary battery according to claim 1.

**35.** A method of producing a laminated polyester film, comprising directly depositing a layer (hereinafter referred to as layer M) composed of a metal and/or metal-based compound and having a thickness of 0.2 $\mu$m or more onto a polyester film that satisfies the following (9) and (10):

(9) a volume resistivity at 23°C and 65 %RH is $1.0 \times 10^8$ $\Omega$cm or more and $9.0 \times 10^{16}$ $\Omega$cm or less; and
(10) a film thickness of the polyester film is 1 $\mu$m or more and 30 $\mu$m or less.

## INTERNATIONAL SEARCH REPORT

| International application No. |
| --- |
| **PCT/JP2024/006460** |

| | |
| --- | --- |
| **A.** | **CLASSIFICATION OF SUBJECT MATTER** |

*H01M 4/66*(2006.01)i; *B32B 27/36*(2006.01)i; *C08J 5/18*(2006.01)i; *H01G 9/048*(2006.01)i; *H01G 11/68*(2013.01)i
FI:   H01M4/66 A; H01G11/68; H01G9/048 Z; B32B27/36; C08J5/18 CFD

According to International Patent Classification (IPC) or to both national classification and IPC

| | |
| --- | --- |
| **B.** | **FIELDS SEARCHED** |

Minimum documentation searched (classification system followed by classification symbols)

H01M4/66; B32B27/36; C08J5/18; H01G9/048; H01G11/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | WO 2022/244326 A1 (TORAY KP FILMS INC.) 24 November 2022 (2022-11-24) | 1-35 |
| A | JP 2000-357517 A (MATSUSHITA ELECTRIC INDUSTRIAL CO., LTD.) 26 December 2000 (2000-12-26) | 1-35 |
| A | JP 2014-220187 A (TEIJIN DUPONT FILMS JAPAN LTD.) 20 November 2014 (2014-11-20) | 1-35 |
| A | JP 1-204933 A (TORAY INDUSTRIES, INC.) 17 August 1989 (1989-08-17) | 1-35 |
| A | JP 2005-54212 A (TORAY INDUSTRIES, INC.) 03 March 2005 (2005-03-03) | 1-35 |
| A | JP 2004-273132 A (MATSUSHITA ELECTRIC INDUSTRIAL CO., LTD.) 30 September 2004 (2004-09-30) | 1-35 |
| A | JP 2000-44703 A (TEIJIN LIMITED) 15 February 2000 (2000-02-15) | 1-35 |
| A | JP 2019-83318 A (DAI NIPPON PRINTING CO., LTD.) 30 May 2019 (2019-05-30) | 1-35 |

☐ Further documents are listed in the continuation of Box C.   ☑ See patent family annex.

| | |
| --- | --- |
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 675 712 A1

**INTERNATIONAL SEARCH REPORT**
Information on patent family members

International application No.

**PCT/JP2024/006460**

| Patent document cited in search report | | | Publication date (day/month/year) | Patent family member(s) | | | Publication date (day/month/year) |
|---|---|---|---|---|---|---|---|
| WO | 2022/244326 | A1 | 24 November 2022 | CN | 116848677 | A | |
| | | | | KR | 10-2024-0011657 | A | |
| | | | | TW | 202302340 | A | |
| JP | 2000-357517 | A | 26 December 2000 | (Family: none) | | | |
| JP | 2014-220187 | A | 20 November 2014 | (Family: none) | | | |
| JP | 1-204933 | A | 17 August 1989 | (Family: none) | | | |
| JP | 2005-54212 | A | 03 March 2005 | (Family: none) | | | |
| JP | 2004-273132 | A | 30 September 2004 | (Family: none) | | | |
| JP | 2000-44703 | A | 15 February 2000 | (Family: none) | | | |
| JP | 2019-83318 | A | 30 May 2019 | (Family: none) | | | |

Form PCT/ISA/210 (patent family annex) (July 2022)

45

**EP 4 675 712 A1**

**Patent documents cited in the description**

- JP 2021182519 A
- JP 2021086782 A
- JP 2018098206 A